# EUROPEAN PATENT SPECIFICATION

(11) **EP 1 948 736 B1**
(45) Date of publication and mention of the grant of the patent: **16.03.2011**
(21) Application number: 06819315.0
(22) Date of filing: 08.11.2006
(51) Int. Cl.: C09C 1/00

(54) **PROCESS FOR PREPARING FLAKE-FORM PARTICLES**
VERFAHREN ZUR HERSTELLUNG VON SCHUPPENFÖRMIGEN PARTIKELN
PROCEDE DE PREPARATION DE PARTICULES SOUS FORME DE FLOCON

(30) Priority: 17.11.2005 EP 05110898
(43) Date of publication of application: 30.07.2008
(73) Proprietor: BASF SE, 67056 Ludwigshafen (DE)
(72) Inventor: BUJARD, Patrice, CH-1784 Courtepin (CH)
(86) International application number: PCT/EP2006/068200
(87) International publication number: WO 2007/057328

(56) References cited:
- WO-A-00/24946
- WO-A-03/046245
- WO-A-2004/052999
- WO-A-2004/065295
- US-A- 3 697 070
- US-A1- 2005 161 678

## Description

The present invention relates to a process for the production of plane-parallel platelets, comprising the steps:
a) deposition of a separating agent I, which is dissolvable in water, onto a carrier to produce a separating agent layer,
b) vapour-deposition of a separating agent II, which is not dissolvable in water, onto the separating agent layer of step a),
c) vapour-deposition of at least one product layer onto the separating agent layer of step b),
d) vapour-deposition of a separating agent II, which is not dissolvable in water, onto the product layer of step c),
e) dissolution of the separating agent layer of step a) in water and production of a suspension in which the at least one product layer is present in the form of plane-parallel platelets, the top surface and the bottom surface, but not the side surfaces of which are covered by the separating agent II, and
f) dissolution of the separating agent layer of steps b) and d) in a solvent and production of a suspension in which the product, comprising at least one layer, is present in the form of plane-parallel platelets.

Aluminum flakes on which SiO or SiO₂ protective layers are vapor-deposited by means of PVD (physical vapor deposition) are known.

WO00/69975 discloses aluminum flakes comprising
(a) a layer of a dielectric material, such as silicon monoxide or silicon dioxide,
(b) a layer of a metal, such as aluminum,
(c) a layer of a dielectric material, such as silicon monoxide or silicon dioxide. The thickness of the layers of the dielectric is such that the optical properties of the metal are not significantly affected, that is to say is in the range of from 10 to 20 nm.

US-A-6,013,370 discloses aluminum flakes comprising
(a) a layer of a dielectric material, such as silicon dioxide,
(b) a layer of a metal, such as aluminum,
(c) a layer of a dielectric material, such as silicon dioxide. The thickness of the layers of the dielectric is such that the optical properties of the metal are not significantly affected, that is to say is in the range of from 50 to 200 nm.

In Example 2 of WO00/24946, the manufacture of SiO-coated aluminum flakes is described. According to.the description, the thickness of the SiO protective layer is 15 nm or less.

A discontinuous multi-step method is used for the production of optically variable pigment platelets, such as are used for increasing the security of bank notes against forgery (EP-A-227423). US-B-5,278,590 describes a similar method. In US-B-4,168,985 (Venis), US-B-3,123,489 (Bolomey et al.*)* and US-B-5,156,720 (Rosenfeld), the separating agents used are inorganic salts, which are dissolved in a subsequent step using water as solvent, as a result of which the product layer is present in the form of flakes in aqueous suspension.

According to WO99/65618 (Kittler), waxy substances are vaporised and then, under the same vacuum, the product layer is vapour-deposited or sputtered. After a large number of revolutions of the carrier, usually a rotating cylinder, the arrangement of n layers (wax/metal) is scraped off. In a further step, outside the vacuum apparatus, the wax is washed out of the collected paste by means of solvent(s). In all cases, large amounts of solvent(s), which have to be either reprocessed or disposed of subsequently, are required in order to wash the product.

Examples of the vaporisability of organic substances for such layers by the PVD method are described in US-B-6,101,316 (Nagashima et al.), DE-A-2706392 (US-B-4268541, Ikeda et al.), DE-A-2009080 (US-B-3678888, Davies et al.) and US-B-3547683 (Williams, Hayes).

According to those publications, addition polymers and condensation polymers, silicone resins, phthalocyanine dyes and even natural materials such as colophony are vaporised. A further method by means of which organic polymer layers are produced using the PVD method is described in US-B-5,440,446 (Shaw), wherein a liquid monomer is vaporised, condensed in wet form on a passing film carrier on a cooled roller and, on the same roller, immediately polymerised by electron beam bombardment, as a result of which a solid film forms. Subsequently, a metal layer, usually aluminum, is vapour-deposited.

US-B-4,382,985 discloses the deposition of a polymer film onto a substrate by means of plasma polymerisation of fluoroalkyl acrylate monomers. From US-B-5,904,958 it is known to deposit organic monomers on substrates by means of vacuum methods and subsequently to carry out polymerisation. From JP11-140626A (Patent Abstracts of Japan) it is known to apply a thin film of triazine monomers to a substrate, for example by means of a vacuum method, and then to carry out polymerisation.

The aim of all those methods is to produce firmly adherent protective layers. Rapid solubility in solvents is not desired and would even be damaging.

DE-A-19933230 and DE-A-19935181 (Moosheimer et al.) disclose release layers or protective layers comprising organic monomers that are preferably water-soluble, especially triazine monomers. Such layers can be dissolved away using warm water, which is, however, not suitable for the method according to the invention, because of the difficulty of removing it from the products.

US3697070 describes insoluble resin-supported planar reflective metal flakes. The insoluble resin-supported planar reflective metal flakes are produced by first surfacing a polyethylene terephthalate film with a release coating, drying the release coating, depositing an insoluble resin thereover, drying of the resin layer, vapour depositing of an aluminium film on the insoluble resin layer, depositing an insoluble resin on the aluminium layer, drying of the resin layer, and dissolving the release layer in acetone. The resin functions as firmly adherent protective layer.

WO03046245 describes a process for making metal flakes comprising: the deposition under vacuum of alternating layers of a vaporized polymeric release coat layer and a vapour deposited metal layer to build up in sequence a multi-layer structure. The multi-layer structure is removed from the substrate by dissolving polymeric release coat in an organic solvent, whereby single layer metal flakes are obtained.

WO02/094945 (Weinert) relates to a method for the production of plane-parallel platelets, comprising the steps:
a) vapour-deposition, at a pressure below atmospheric pressure, of a separating agent onto a carrier to produce a separating agent layer,
b) vapour-deposition, at a pressure below atmospheric pressure, of at least one product layer onto the separating agent layer, and
c) dissolution of the separating agent layer in a solvent and production of a suspension in which the at least one product layer is present in the form of plane-parallel platelets, in which method the separating agent is selected from the group consisting of anthracene, anthraquinone, acetamidophenol, acetylsalicylic acid, camphoric anhydride, benzimidazole, benzene-1,2,4-tricarboxylic acid, biphenyl-2,2-dicarboxylic acid, bis(4-hydroxyphenyl)sulfone, dihydroxyanthraquinone, hydantoin, 3-hydroxybenzoic acid, 8-hydroxyquinoline-5-sulfonic acid monohydrate, 4-hydroxycoumarin, 7-hydroxycoumarin, 3-hydroxynaphthalene-2-carboxylic acid, isophthalic acid, 4,4-methylene-bis-3-hydroxynaphthalene-2-carboxylic acid, naphthalene-1,8-dicarboxylic anhydride, phthalimide and its potassium salt, phenolphthalein, phenothiazine, saccharin and its salts, tetraphenylmethane, triphenylene, triphenylmethanol, and also mixtures of at least two of those substances.

US2005161678 describes a product produced by a PVD method, which consists of thin plane-parallel structures having a thickness in the range from 20 to 2000 nm and small dimensions in the range below one mm. Production is carried out by condensation of silicon suboxide onto a carrier passing by way of the vaporisers. The carrier is pre-coated, before condensation of the silicon suboxide, with a soluble, inorganic or organic separating agent in a PVD method.

US3697070 describes flakes which are supported and rendered more planar by using a metal film surfaced on both sides with a relatively insoluble resinous film having a thickness of at least 0.01 mil (0.254 µm). When the supported metal film is broken up to form flakes, the flakes are flatter and reflect light over a larger portion of their surface to permit use in smaller amount. In the production of aluminium flakes a support such as polyethylene terephthalate (Mylar) is coated with a soluble polymer layer release coating in order that this first coating might be easily stripped from the Mylar support upon subsequent treatment with organic solvent. A layer of polymer of limited solubility is then applied and force dried to remove the solvent employed to apply the same. The aluminum film is then applied, especially by vapor deposition. Then, a further coating of polymer layer of limited solubility is applied and force dried forming a sandwich of two layers of relatively insoluble polymer, one on either surface of the film of metal. The composite of support, release coating and sandwich or laminate is run through a bath of solvent (preferably acetone, which may be heated if desired) which dissolves the release coating and the sandwich comes off the Mylar support. This provides a slurry of partially broken up sandwich in organic solvent and this slurry is mixed with a stirrer to further break up the sandwich, without delamination, into flakes of desired size.

WO2004052999 relates to aluminum flakes, comprising (A1) a layer consisting of SiO_{z}, (B) a layer consisting of aluminum on the layer (A1) and (A2) a layer consisting of SiO_{z} on the layer (B), wherein 0.70 ≤ z ≤ 2.0. The SiO_{y}-coated aluminum flakes can be obtained by means of a process comprising the following steps:
a) vapor-deposition of a separating agent onto a carrier to produce a separating agent layer,
b) vapor-deposition of an SiO_{y} layer onto the separating agent layer,
c) vapor-deposition of an Al layer onto the SiO_{y} layer,
d) vapor-deposition of an SiO_{y} layer onto the Al layer,
e) dissolution of the separating agent layer in a solvent and
f) separation of the SiO_{y}-coated aluminum flakes from the solvent, wherein 0.70 ≤ y ≤ 1.95, preferably 1.0 ≤ y ≤ 1.80, most preferably 1.10 ≤ y ≤ 1.80.

WO2004065295 relates to a process for the production of porous materials, comprising the steps:
a) vapor-deposition of a separating agent onto a carrier to produce a separating agent layer,
b) the simultaneous vapor-deposition of a material and a separating agent onto the separating agent layer (a),
c) the separation of the material from the separating agent. The process is suitable for the production of porous inorganic materials or a matrix material containing nanoparticles with high uniformity of thickness and/or high effective surface area.

US3697070 describes the production of resin-surfaced aluminum flakes. The flakes are supported and rendered more planar by using a metal film surfaced on both sides with a relatively insoluble resinous film having a thickness of at least 0.01 mil. The supported metal film is broken up to form flakes.

WO03068868A2 describes products (SiO_{y}, SiO₂, SiC) produced in a PVD method, which consists of thin plane-parallel structures having a thickness in the range from 20 to 2000 nm and small dimensions in the range below one mm. Production is carried out by condensation of silicon suboxide onto a carrier passing by way of the vaporisers. The carrier is pre-coated, before condensation of the silicon suboxide, with a soluble, inorganic or organic separating agent in a PVD method. The SiO_{y} may be oxidised to SiO₂ in an oxygen-containing gas at atmospheric pressure and temperatures of more than 200 °C or SiO_{y} may be converted to SiC at the surface of the plane-parallel structures in a carbon-containing gas at from 500 °C to 1500 °C.

WO06/021528, which enjoys an earlier priority date than the present invention, but is published thereafter, relates to process for the production of plane-parallel platelets, comprising the steps of :
a) vapour-deposition of a separating agent onto a carrier to produce a separating agent layer,
b) vapour-deposition of at least one product layer onto the separating agent layer, and
c) dissolution of the separating agent layer in a solvent and production of a suspension in which the at least one product layer is present in the form of plane-parallel platelets,
wherein
the separating agent is selected from the group consisting of anthracene, anthraquinone acetamidophenol, acetylsalicylic acid, camphoric anhydride, benzimidazole, benzene-1,2,4-tricarboxylic acid, biphenyl-2.2-dicarboxylic acid, bis(4-hydroxyphenyl)sulfone, dihydroxyanthraquinone, hydantoin, 3-hydroxybenzoic acid, 8-hydroxyquinoline-5-sulfonic acid monohydrate, 4-hydroxycoumarin, 7-hydroxycoumarin, 3-hydroxynaphthalene-2-carboxylic acid, isophthalic acid, 4,4-methylene-bis-3-hydroxynaphthalene-2-carboxylic acid, naphthalene-1,8-dicarboxylic anhydride, phthalimide:and its potassium salt, phenolphthalein, phenothiazine, saccharin and its salts, tetraphenylmethane, triphenylene, triphenylmethanol, and also mixtures of at least two of those substances, especially pentaerythritol (C(CH₂OH)₄), trimesic acid (= 1,3,5 bezene tricarboxylic acid), DL-alanine, DL-valine, 2,6-diaminopurine, ascorbic acid, 1,3,5-benzenetricarboxylic acid, o-acetylsalicyclic acid, diphenic acid, terephthalic acid, pyrogallol, cyanuric acid, hexamethyltetramine (urotropin), fumaric acid, and 4-acetylbenzoic acid and also mixtures of at least two of those substances.

The problem of the present invention was accordingly to make available a substantially improved method, compared to the above-mentioned prior art, for the production of plane-parallel platelets having excellent surface characteristics by using the PVD method. Said object is solved by using a separating agent I, which is dissolvable in water, in combination with a separating agent II, which is not dissolvable in water. In this way Al/separating agent II flakes can be removed from the substrate by dissolving the separating agent I in water, wherein separating agent II protects the Al flakes against the influence of water. The aluminium flakes can be released by dissolving separating agent II in an inert solvent.

Accordingly, the present invention relates to a process for the production of plane-parallel platelets, comprising the steps:
a) deposition of a separating agent I, which is dissolvable in water, onto a carrier to produce a separating agent layer,
b) vapour-deposition of a separating agent II, which is not dissolvable in water, onto the separating agent layer of step a),
c) vapour-deposition of at least one product layer onto the separating agent layer of step b),
d) vapour-deposition of a separating agent II, which is not dissolvable in water, onto the product layer of step c),
e) dissolution of the separating agent layer of step a) in water and production of a suspension in which the at least one product layer is present in the form of plane-parallel platelets, the top surface and the bottom surface, but not the side surfaces of which are covered by the separating agent II, and
f) dissolution of the separating agent layer of steps b) and d) in a solvent and production of a suspension in which the product, comprising at least one layer, is present in the form of plane-parallel platelets.

According to the present invention the wording "dissolution of the separating agent layer in a solvent" means that the separating agent layer is either solvent-soluble, or dissolvable.

If the separating agent is an organic separating agent, it should be sublimable under vacuum, should have a melting point between 50 to 600 °C, especially higher than ca. 150°C, very especially higher than 200°C, most preferably between 250 to 500 °C. The layer obtained by sublimation of the separating agent under vacuum (at a pressure ≤ 1*10⁻³ mbar) should be soluble either in an organic solvent, or in water, depending on whether it is used as separating agent I, or II.

Separating agent II may be a UV cured polymer (US-A-5904958), which is not soluble in water. Three adjacent evaporators can be set in series such that a polymer composition is obtained. The first and third evaporator supplies monomer which becomes insoluble after curing. The second evaporator in row supplies a monomer which can be easily dissolved.

In addition, the organic separating agents should meet the following conditions:
The process can be used to prepare a huge number of alternating layers of separating agent II and product on separating agent I [separating agent I / (separating agent II, product)n / separating agent II, wherein n is the number of repetitions of separating agent II and product and is in a preferred range of from 1 to 150. More repetitions are, in principal, possible, wherein the maximum number of repetitions n is defined by the adhesion force of the separating agent I.

They are solid, non-polymerisable organic compounds having vapour pressures of less than 10⁻³ Pa at 25°C (fundamental requirement in order to be able to use a material without self-vaporisation at room temperature in a vacuum of < 0.1 Pa).

The separating agent layer is rapidly soluble in water, optionally in the presence of a base, or industrial solvents such as, for example, ethanol, isopropanol, butanol, ethyl acetate, petroleum spirit, methyl isobutyl ketone, methyl ethyl ketone, trichloroethylene, or 1,2-dichloroethane.

Below their melting points, the separating agents have vapour pressures of from 10 to 1000 Pa. As a result, use of the separating agents according to the invention results in sublimative vaporisation below the triple point of the substances and avoids technically disadvantageous spatter formation.

The preferred separating agents have, moreover, high thermal stability in a vacuum of less than 1000 Pa.

In addition, these substances condense in amorphous form. This is important for obtaining highly reflecting metal layers that are to be vapour-deposited onto the separating agent layer.

The separating agents I and II can, in principal, be applied by dipping, rolling, pouring or spraying, but are preferably applied by physical vapor deposition.

The separating agent I is selected from anthracene, anthraquinone, acetamidophenol, acetylsalicylic acid, camphoric anhydride, benzimidazole, benzene-1,2,4-tricarboxylic acid, biphenyl-2,2-dicarboxylic acid, bis(4-hydroxyphenyl)sulfone, dihydroxyanthraquinone, hydantoin, 3-hydroxybenzoic acid, 8-hydroxyquinoline-5-sulfonic acid monohydrate, 4-hydroxycoumarin, 7-hydroxycoumarin, 3-hydroxynaphthalene-2-carboxylic acid, isophthalic acid, 4,4-methylene-bis-3-hydroxynaphthalene-2-carboxylic acid, naphthalene-1,8-dicarboxylic anhydride, phthalimide and its potassium salt, phenolphthalein, phenothiazine, saccharin and its salts, tetraphenylmethane, triphenylene, triphenylmethanol, and also mixtures of at least two of those substances, especially pentaerythritol (C(CH₂OH)₄), trimesic acid (= 1,3,5 bezene tricarboxylic acid), DL-alanine, DL-valine, 2,6-diaminopurine, ascorbic acid, 1,3,5-benzenetricarboxylic acid, o-acetylsalicyclic acid, diphenic acid, terephthalic acid, pyrogallol, cyanuric acid, hexamethyltetramine (urotropin), fumaric acid, and 4-acetylbenzoic acid and also mixtures of at least two of those substances.

Examples of preferred organic separating agents, which are water soluble, are cyanuric acid, especially pentaerythritol, trimesic acid (= 1,3,5 bezene tricarboxylic acid), DL-alanine, DL-valine, 2,6-diaminopurine, ascorbic acid, 1,3,5-benzenetricarboxylic acid, o-acetylsalicyclic acid, diphenic acid, terephthalic acid, pyrogallol, hexamethyltetramine (urotropin), fumaric acid, and 4-acetylbenzoic acid and also mixtures of at least two of those substances. 1,3,5-benzenetricarboxylic acid, terephthalic acid, hexamethyltetramine (urotropin) and 4-acetylbenzoic acid are especially preferred and pentaerythritol is most preferred. The solubility of the separating agent can optionally be improved by increase of pH, for example by addition of a base.

The separating agent II is selected from a polymer, especially a soluble, partly cured polymer, such as the styrene resins described in WO00/24946, such as Dow 685D extrusion grade styrene resin, and the acrylates described in US-B-5945174, US-B-6010751, or US-B-5877895, such as 2-phenoxy ethyl acrylate, isobornyl acrylate and lauryl acrylate, dicetylene glycol diacrylate, neopentyl glycol diacrylate and polyethylene glycol diacrylate (PEGDA), or tetraethylene glycol diacrylate, trimethylol propane triacrylate and pentaerythritol triacrylate, isobutylmethacrylate, isobornyl methacrylate and 2-phenoxyethyl acrylate, triethylene glycol dimethacrylate, and 1,6-hexanediol dimethacrylate and mixtures of these compounds, adamantane and derivatives of adamantane, such as 1-cyanoadamantane, 1-adamantane carboxylic acid, 1-hydroxyadamantane, 2-hydroxyadamantane, 2-oxoadamantane, diphenic acid, 7-hydroxycoumarin, benzoguanamine (2, 4, 6-diamino-4-phenyl-1, 3, 5-triazine), ferrocen, campher and derivatives, anthracene, 9,10-anthraquinone and pyromellitic dianhydride. Non-polymeric organic separating agents are preferred against polymeric separating agents.

Benzimidazole, dihydroxyanthraquinone, 4-hydroxycoumarin, 7-hydroxycoumarin and also mixtures of at least two of those substances are suitable as separating agent II, acetamidophenol, anthracene, anthraquinone, bis(4-hydroxyphenyl)sulfone, phenolphthalein, tetraphenylmethane, triphenylene, triphenylmethanol, and also mixtures of at least two of those substances are especially suitable as separating agent II.

The product layer can consist of any material which sublimes under vacuum and can be processed according to the process of the present invention. The product layer can consist of a mixture of materials (cf. WO04/065492). The product deposited by physical vapor deposition (PVD) can be composed of more than one layer, for example 2, 3, or 5 layers (WO04/052999). In preferred embodiments of the present invention the products of the process are plane-parallel metal platelets, optionally comprising further layers, or plane-parallel platelets of a dielectric material having a "high" or "low" refractive index, optionally comprising further layers.
Examples of metals are Al, Cu, Mo, V, Ag, Cr, Zr, Nb, Ni, Fe, Co, Ti, Au, Pd, W, Hf, Rh, Ir, Pt, Cd or alloys thereof, such as chromium-nickel, iron-nickel, iron-chromium and nickel-cobalt, wherein Cu, Ag, Ti, or Al, or alloys thereof are preferred and Al or alloys thereof are most preferred. Examples of products comprising more than one layer are given below. Examples of dielectric materials having a "high" or "low" refractive index and being sublimable under vacuum are described below. MgF₂ flakes are preferred. SiO_{z} flakes are most preferred.
In a preferred embodiment of the present invention multiple layers of separating agent II and product are deposited alternately, wherein the top surface and the bottom surface of each product layer is covered by a layer of separating agent II. The separating agent II can vary within a multilayer stack (the separating agent layer II on the separating agent layer I is different from the subsequent separating agent layers II), but is preferably the same in all layers.

The plane-parallel platelet precursors obtained in step e) comprise
(A1) a layer consisting of a separating agent II, which is not dissolvable in water,
(B) at least one product layer on the layer (A1) and
(A2) a layer consisting of the separating agent II on the layer (B). The plane-parallel platelet precursors can comprise a huge number of alternating layers of separating agent II and product on separating agent I. The plane-parallel platelet precursors of the present invention are characterized in that the bottom and top surface of the product layer is covered with a continous layer of the separating agent II, wich protects the product layer, such as, for example Al layer, against the influence of water.

The layer thickness of the separating agent layers (A1) and (A2) is from 20 to 500 nm, especially 50 to 300 nm. In a Particularly preferred embodiment is from 50 to 250 nm.

In a preferred embodiment of the present invention the product layer consists of a metal, especially Al, Cu, Mo, V, Ag, Cr, Zr, Nb, Ni, Fe, Co, Ti, Au, Pd, W, Hf, Rh, Ir, Pt, Cd or alloys thereof, especially Al,-Cu, Ag, or Ti; or of SiO_{y}, wherein 0.70 ≤ y ≤ 1.95, preferably 1.0 ≤ z ≤ 1-8, most preferably 1.0 ≤ z ≤ 1.6.

The plane-parallel platelet precursors can be used for the production of plane-parallel platelets.

The present invention is illustrated in more detail on the basis of Al flakes, SiO_{z} coated aluminum flakes and SiO_{z} flakes, but is not limited thereto.

In a particularly preferred embodiment the process of the present invention is used to prepare aluminum flakes:
a) deposition of a separating agent I, which is dissolvable in water, onto a carrier to produce a separating agent layer,
b) vapour-deposition of a separating agent II, which is not dissolvable in water, onto the separating agent layer of step a),
c) vapour-deposition of an aluminum layer onto the separating agent layer of step b), and
d) vapour-deposition of a separating agent II, which is not dissolvable in water, onto the aluminum layer of step c),
e) dissolution of the separating agent layer of step a) in water and production of a suspension in which the aluminum layer is present in the form of plane-parallel platelets, the top surface and the bottom surface, but not the side surfaces of which are covered by the separating agent II, and
f) dissolution of the separating agent layer of steps b) and d) in a solvent and production of a suspension in which the aluminum is present in the form of plane-parallel platelets.

The separating agent II is preferably one, which is readily soluble in an organic solvent and which does not react with the aluminium:

| **Product Name** | **Mp. [°C]** | **Solvent** |
|---|---|---|
| adamantane | 205 | aceton, benzene, carbon tetrachloride |
| diphenic acid | 225 | ethanol, ethy ether |
| 7-hydroxycouramin | 230 | acetic acid, ethanol |
| benzoguanamine | 225 | ethanol, ethyl ether, trifluoroacetic acid |
| ferrocen | 175 | aceton, cyclohexane |
| DL-camphor | 180 | aceton |
| anthracene | 210 | ethanol, Acetone |
| 9,10-anthraquinone | 285 | ethanol |
| pyromellitic dianhydride | 285 | ethanol, acetone, tetrahydrofurane, dimethylsulfoxide |

The first layer on the substrate, such as a drum, band or polymer foil, is a pentaerythritol (or equivalent layer), which can be dissolved with water. The layer directly on top of the pentaerythritol layer can be made of an organic, not water soluble compound as listed above, but also an acrylate as mentioned in the patent US4382985, US5945174 and US5440446. The separating agent II should wet at good as possible the surface of pentaerythritol and, if possible, it should also feature some levelling effect, i.e. should smooth the surface.

In a preferred embodiment of the present invention separating agent I is pentaerythritol and separating agent II is (mono or di or tri or tetra)-acrylate, or methacrylate. Such acrylate(s) wet on the one hand the pentaerythritol layer and on the other hand level the first interface on which Al will be evaporated. If a multilayer stack is produced, the subsequent separating agent layers II can be different from the fist layer of separating agent II. It can be a different acrylate, or (meth)acrylate, or an organic compound from the table above, wherein the following layer structure results:

| |
|---|
| separating agent II: methacrylate, or organic compound |
| aluminum |
| separating agent II: methacrylate, or organic compound |
| aluminum |
| separating agent II: methacrylate, or organic compound |
| aluminum |
| separating agent II: pentamethacrylate (leveling and wetting of the pentaerythritol interface) |
| separating agent I: pentaerythritol (thickness = -300 nm, water soluble) |
| substrate, such as a drum, band or polymer foil |

The number of the Al/methacrylate, or organic compound layers is defined by the breaking limit of the first, water soluble pentaerythritol layer

The process mentioned above makes available aluminum flakes that have a high degree of plane parallelism and a defined thickness in the region of ± 10 %, preferably ± 5 %, of the average thickness.

The aluminum flakes have an average diameter of at least 2 µm, especially from 2 to 20 µm, more especially from 3 to 15 µm, and most preferred from 5 to 15 µm. The thickness of the aluminum flakes is generally from 10 to 150 nm, especially from 10 to 100 nm, and more especially from 30 to 60 nm.

Such aluminum flakes can be further processed to pigments with optical variable properties by applying further layers on the aluminum substrate.

They can be coated on the entire surface with Fe₂O₃, wherein the Fe₂O₃ has preferably a thickness of 10 to 50 nm, or they can be successively coated with layers of SiO₂ (thickness = 250 to 700 nm) and Fe₂O₃ (thickness = 10 to 40 nm).

In a preferred embodiment the present invention relates to a process for the production of plane-parallel platelets of aluminum (aluminum) flakes, comprising
(A1) a layer consisting of SiO_{z},
(B) a layer consisting of aluminum on the layer (A1) and
(A2) a layer consisting of SiO_{z} on the layer (B), wherein
   0.70 ≤ z ≤ 2.0. In said embodiment step c) is divided into 3 partial steps c1), c2) and c3):
   c1) vapor-deposition of an SiO_{y} layer onto the separating agent layer,
   c2) vapor-deposition of an Al layer onto the SiO_{y} layer,
   c3) vapor-deposition of an SiO_{y} layer onto the Al layer,

The plane-parallel platelet precursors obtained in step e)
comprise
(A1) a layer consisting of a separating agent II, which is not dissolvable in water,
(B) a product layer, such as an aluminum layer on the layer (A1) and
(A2) a layer consisting of the separating agent II on the layer (B); especially to aluminum flakes, comprising
   (A1) a layer consisting of a separating agent II, which is not dissolvable in water,
   (B1) a layer consisting of SiO_{z} on the layer (A1),
   (B) a layer consisting of aluminum on the layer (B1) and
   (B2) a layer consisting of SiO_{z} on the layer (B),
   (A2) a layer consisting of the separating agent II on the layer (B2).
   wherein 0.70 ≤ z ≤ 2.0.

The layer thicKness of the SiO_{z} layers is from 10 to 50 nm, preferably from 20 to 30 nm, or 50 to 100 nm, not necessarily with the same thickness within the preferred ranges.

The layer thickness of the layer (B) consisting of aluminum is generally from 10 to 100 nm, preferably from 30 to 50 nm.

In a further preferred embodiment the layer thickness of the layer (B) consisting of aluminum is from 40 to 150 nm, preferably ca. 100 nm and the layer thickness of the SiO_{z} layers (A1) and (A2) is from 50 to 200 nm, especially ca. 100 nm.

For increasing the stability to weathering and light fastness, the SiO_{y} layer with 0.70 ≤ y ≤ 1.8 can be oxidized, or converted into an SiO_{z} layer, with air or another oxygen-containing gas at a temperature of more than 200°C, preferably more than 400°C and less than 600°C. For example, aluminum flakes coated with SiO_{y} (y = 1) can be converted into aluminum flakes coated with SiO_{z} (z = 1.40 to 2.00) by heating at ≤ 500 °C for several hours in an oxygen-containing atmosphere. In that process, if the entire SiO_{y} is not converted into SiO_{z}, an SiO₂ layer forms on the surface of the SiO_{y} layer, with y gradually decreasing towards the aluminum layer.

The aluminum flakes comprise
(A1) a layer consisting of a separating agent II, which is not dissolvable in water,
(C1) a layer consisting of SiO₂,
(B1) a layer consisting of SiO_{y} on the layer (C1),
(B) a layer consisting of aluminum on the layer (A1),
(B2) a layer consisting of SiO_{y} on the layer (B) and
(C2) a layer consisting of SiO₂ on the layer (A2),
(A1) a layer consisting of a separating agent II, wherein
0.70 ≤ y < 1.95, preferably 1.0 ≤ y ≤ 1.8, most preferably 1.4 ≤ y ≤ 1.8.

The layer thickness of the layer (B) consisting of aluminum is generally from 10 to 100 nm, preferably from 30 to 50 nm.

The layer thickness of the layer (B1) consisting of SiO_{y} and of the layer (C1) consisting of SiO₂ and the layer thickness of the layer (B2) consisting of SiO_{y} and of the layer (C2) consisting of SiO₂ is from 10 to 50 nm, preferably from 20 to 30 nm, or 50 to 200 nm, when the aluminum flakes are the end product, and from 200 to 500 nm when the aluminum flakes are an intermediate for interference pigments.

It is also possible for the finished aluminum flakes to be subjected to after-coating or after-treatment, which further increases the stability to light, weathering and chemicals or facilitates handling of the pigment, especially incorporation into various media. The processes described in EP-A-477433, EP-A-826745 or EP-A-10844198, for example, are suitable as after-treatment or after-coating.

The aluminum flakes can furthermore be converted into interference pigments by being coated with further layers. The fundamental structure of such pigments is described, for example, in the following patents: EP-A-571836, EPA-708154, EP-A-768343, EP-A-1025168 and WO00/34395.

In order to be able to use the aluminum flakes (flake-form aluminum) in aqueous compositions, it is necessary for those pigments to be protected against corrosion by water. According to R. Besold, Aluminumpigmente für wässrige Beschichtungen - Widerspruch oder Wirklichkeit?, Farbe + Lack 97 (1991) 311 - 314, a large number of procedures, which can be divided into two groups, are known for the stabilisation of aluminum pigments:
- adsorption of corrosion inhibitors on the pigment surface
   - phosphoric acid esters: DE-A-3020073, EP-A-170474, EP-A-133644, US-A-4,565,716, US-A-4,808,231,
   - phosphates and phosphites: US-A-4,565,716, US-A-4,808,231, EP-A-240367,
   - vanadates : EP-A-305560, EP-A-104075,
   - chromates: US-A-2,904,523, US-A-4,693,754, EP-A-259592,
   - dimeric acids: DE-A-3002175, and
- encapsulation of the pigments with a continuous inorganic protective layer:
   - SiO₂: US-A-2,885,366, US-A-3,954,496,
   - Fe₂O₃: DE-A-3003352,
   - TiO₂: DE-A-3813335,
or organic protective layer:
- DE-A-3630356, DE-A-3147177, EP-A-477433, especially resins modified with phosphoric acid: EP-A-170474, CA-A-1,273,733, AT-A-372696, DE-A-3807588, EP-A-319971.

The aluminum flakes have an aluminum core with two substantially parallel faces, the distance between which faces is the shortest axis of the core, the parallel faces, but not the side faces, being coated with silicon oxide. Furthermore, the aluminum flakes coated with silicon oxide have a length of from 2 µm to 5 mm, a width of from 2 µm to 2 mm and a thickness of from 30 to 800 nm and a length to thickness ratio of at least 2:1. The aluminum flakes preferably have lengths and widths of from 1 to 60 µm, preferably from 2 to 40 µm, most preferably from 5 to 20 µm. The length to thickness ratio is from about 2:1 to about 800:1. The length to width ratio is from 3:1 to 1:1.

The silicon oxide/aluminum flakes are not of a uniform shape. Nevertheless, for purposes of brevity, the flakes will be referred to as having a "diameter." The silicon oxide/aluminum flakes have a high plane-parallelism and a defined thickness in the range of ± 10%, especially ± 5 %, of the average thickness. The silicon oxide /aluminum flakes have a thickness of from 30 to 800 nm, very especially from 70 to 110 nm. It is presently preferred that the diameter of the flakes be in a preferred range of about 2-40 µm with a more preferred range of about 5-20 µm. Thus, the aspect ratio of the flakes of the present invention is in a preferred range of about 40 to 290.

In an especially preferred embodiment, the interference pigments on the basis of the silicon oxide/metal substrate comprises a further layer of a dielectric material having a "high" refractive index, that is to say a refractive index greater than about 1.65, preferably greater than about 2.0, most preferred greater than about 2.2, which is applied to the entire surface of the silicon oxide/metal substrate. Examples of such a dielectric material are zinc sulfide (ZnS), zinc oxide (ZnO), zirconium oxide (ZrO₂), titanium dioxide (TiO₂), carbon, indium oxide (In₂O₃), indium tin oxide (ITO), tantalum pentoxide (Ta₂O₅), chromium oxide (Cr₂O₃), cerium oxide (CeO₂), yttrium oxide (Y₂O₃), europium oxide (Eu₂O₃), iron oxides such as iron(II)/iron(III) oxide (Fe₃O₄) and iron(III) oxide (Fe₂O₃), hafnium nitride (HfN), hafnium carbide (HfC), hafnium oxide (HfO₂), lanthanum oxide (La₂O₃), magnesium oxide (MgO), neodymium oxide (Nd₂O₃), praseodymium oxide (Pr₆O₁₁), samarium oxide (Sm₂O₃), antimony trioxide (Sb₂O₃), silicon monoxides (SiO), selenium trioxide (Se₂O₃), tin oxide (SnO₂), tungsten trioxide (WO₃), or combinations thereof. The dielectric material is preferably a metal oxide. It being possible for the metal oxide to be a single oxide or a mixture of oxides, with or without absorbing properties, for example, TiO₂, ZrO₂, Fe₂O₃, Fe₃O₄, Cr₂O₃, iron titanate, iron oxide hydrates, titanium suboxides, or ZnO, with TiO₂ being especially preferred. On top of the TiO₂ layer, a layer of a metal oxide of low refractive index can be applied. Nonlimiting examples of suitable low index dielectric materials that can be used include silicon dioxide (SiO₂), aluminum oxide (Al₂O₃), and metal fluorides such as magnesium fluoride (MgF₂), aluminum fluoride (AlF₃), cerium fluoride (CeF₃), lanthanum fluoride (LaF₃), sodium aluminum fluorides (e.g., Na₃AlF₆ or Na₅Al₃F₁₄), neodymium fluoride (NdF₃), samarium fluoride (SmF₃), barium fluoride (BaF₂), calcium fluoride (CaF₂), lithium fluorides (LiF), combinations thereof, or any other low index material having an index of refraction of about 1.65 or less. For example, organic monomers and polymers can be utilized as low index materials, including dienes or alkenes such as acrylates (e.g., methacrylate), polymers of perfluoroalkenes, polytetrafluoroethylene (TEFLON), polymers of fluorinated ethylene propylene (FEP), parylene, p-xylene, combinations thereof, and the like. Additionally, the foregoing materials include evaporated, condensed and cross-linked transparent acrylate layers, which may be deposited by methods described in U.S. Pat. No. 5,877,895, or EP-A-733,919, the disclosure of which is incorporated herein by reference. SiO₂, Al₂O₃, AlOOH, B₂O₃, or a mixture thereof, are preferred. SiO₂ is most preferred.

The metal oxide layers can be applied by CVD (chemical vapour deposition) or by wet chemical coating. The metal oxide layers can be obtained by decomposition of metal carbonyls in the presence of water vapour (relatively low molecular weight metal oxides such as magnetite) or in the presence of oxygen and, where appropriate, water vapour (e.g. nickel oxide and cobalt oxide). The metal oxide layers are especially applied by means of oxidative gaseous phase decomposition of metal carbonyls (e.g. iron pentacarbonyl, chromium hexacarbonyl; EP-A-45 851), by means of hydrolytic gaseous phase decomposition of metal alcoholates (e.g. titanium and zirconium tetra-n- and -iso-prop-anolate; DE-A-41 40 900) or of metal halides (e.g. titanium tetrachloride; EP-A-338 428), by means of oxidative decomposition of organyl tin compounds (especially alkyl tin compounds such as tetrabutyltin and tetramethyltin; DE-A-44 03 678) or by means of the gaseous phase hydrolysis of organyl silicon compounds (especially di-tert-butoxyacetoxysilane) described in EP-A-668 329, it being possible for the coating operation to be carried out in a fluidised-bed reactor (EP-A-045 851 and EP-A-106 235).

Phosphate-, chromate- and/or vanadate-containing and also phosphate- and SiO₂-containing metal oxide layers can be applied in accordance with the passivation methods described in DE-A-42 36 332, EP-A-678 561 and in EP-A-826 745 by means of hydrolytic or oxidative gaseous phase decomposition of oxide-halides of the metals (e.g. CrO₂Cl₂, VOCl₃), especially of phosphorus oxyhalides (e.g. POCl₃), phosphoric and phosphorous acid esters (e.g. di- and tri-methyl and di- and tri-ethyl phosphite) and of amino-group-containing organyl silicon compounds (e.g. 3-aminopropyl-triethoxy- and -trimethoxy-silane).

Layers of oxides of the metals zirconium, titanium, iron and zinc, oxide hydrates of those metals, iron titanates, titanium suboxides or mixtures thereof are preferably applied by precipitation by a wet chemical method, it being possible, where appropriate, for the metal oxides to be reduced. In the case of the wet chemical coating, the wet chemical coating methods developed for the production of pearlescent pigments may be used; these are described, for example, in DE-A-1467468. DE-A-1959988, DE-A-20 09 566, DE-A-22 14 545, DE-A-22 15 191, DE-A-22 44 298, DE-A-23 13 331, DE-A-25 22 572, DE-A-31 37 808, DE-A-31 37 809, DE-A-31 51 343, DE-A-31 51 354, DE-A-31 51 355, DE-A-32 11 602 and DE-A-32 35 017, DE 195 99 88, WO 93/08237, WO 98/53001 and WO03/6558.

The metal oxide of high refractive index is preferably TiO₂ and/or iron oxide, and the metal oxide of low refractive index is preferably SiO₂. Layers of TiO₂ can be in the rutile or anastase modification, wherein the rutile modification is preferred. TiO₂ layers can also be reduced by known means, for example ammonia, hydrogen, hydrocarbon vapor or mixtures thereof, or metal powders, as described in EP-A-735,114, DE-A-3433657, DE-A-4125134, EP-A-332071, EP-A-707,050 or WO93/19131.

The metal oxide layers are also obtainable, for example, in analogy to a method described in DE-A-195 01 307, by producing the metal oxide layer by controlled hydrolysis of one or more metal acid esters, where appropriate in the presence of an organic solvent and a basic catalyst, by means of a sol-gel process.

The thickness of the TiO₂ layer is generally in the range of from 5 to 100 nm.

Where appropriate, an SiO₂ (protective) layer can be applied on top of the titanium dioxide layer.

Instead of a layer of a metal oxide having a high index of refraction US-B-6,524,381 materials, such as diamond-like carbon and amorphous carbon, can be deposited by plasma-assisted vacuum methods (using vibrating conveyors, rotating drum coaters, oscillatory drum coaters, and free-fall chambers) as described, for example in US-B-6,524,381, on the SiO_{z}-coated metal substrates.

The plane-parallel structures (pigments) based on silicon oxide/aluminum substrates have on their surface a carbon layer especially a diamond-like carbon layer having a thickness of 5 to 150 nm, especially 20 to 70 nm, more especially 30 to 70 nm.

The term "diamond-like network" (DLN) refers to amorphous films or coatings comprised of carbon and optionally comprising one or more additional components selected from the group consisting of hydrogen, nitrogen, oxygen, fluorine, silicon, sulfur, titanium, and copper. The diamond-like networks comprise approximately 30 to 100 atomic percent carbon, with optional additional components making up the remainder

The thickness of the carbon layer is generally from 5 to 150 nm, preferably from 30 to 70 nm.

Furthermore, the SiO_{z}-coated aluminum flakes may, as described in EP-A-0 982 376, be coated with a nitrogen-doped carbon layer. The process described in EP-A-0 982 376 comprises the following steps:
(a) suspending the silicon oxide-coated aluminum flakes in a liquid,
(b) where appropriate adding a surface-modifier and/or a polymerization catalyst,
(c) before or after step (b), adding one or more polymers comprising nitrogen and carbon atoms, or one or more monomers capable of forming such polymers,
(d) forming a polymeric coating on the surface of the flakes,
(e) isolating the coated flakes and
(f) heating the coated flakes to a temperature of from 100 to 600°C in a gaseous atmosphere.

The polymer may be a polypyrrole, a polyamide, a polyaniline, a polyurethane, a nitrile rubber or a melamine-formaldehyde resin, preferably a polyacrylonitrile, or the monomer is a pyrrole derivative, an acrylonitrile, a methacrylonitrile, a crotonitrile, an acrylamide, a methacrylamide or a crotonamide, preferably an acrylonitrile, methacrylonitrile or crotonitrile, most preferably an acrylonitrile.

Preferably, the flakes are heated in step (f) initially to from 100°C to 300°C in an oxygen-containing atmosphere and then to from 200 to 600°C in an inert gas atmosphere.

The thickness of the nitrogen-doped carbon layer is generally from 10 to 150 nm, preferably from 30 to 70 nm.

Interference pigments on basis of the SiO_{z} coated aluminum flake are available by the process of the present invention, or by coating the SiO_{z} coated aluminum flakes obtained by the process of the present invention with further layers (see above). Such pigments have preferably the following layer structure: C/X/Al/X/C, Al/X/AlX/Al, Cr (5-40 nm)/X (100-600 nm)/Al (50-100 nm)/X (100-600 nm)/Cr (5-40 nm), MoS₂/X/Al/X/MoS₂, Fe₂O₃X/Al/X/Fe₂O₃, wherein X is SiO_{z}, wherein 0.70 ≤ z ≤ 2.0, preferably 1.0 ≤ z ≤ 2.0, most preferably 1.4 ≤ z ≤ 2.0.

In another embodiment the present invention relates to a flaky (platelet-like) pigment which comprises a core of a metal, especially aluminum, coated with a silicon oxide (or alumina) film, the substrate being coated over its entire surface with a metal oxide, selected from titanium dioxide, zirconium oxide, iron oxide, tin oxide, zinc oxide and cerium oxide, and further coated with a semi-transparent thin metal film, which pigment exhibits a color flop effect.

If SiO_{z}/Al/SiO_{z} flakes are used as "substrate", the SiO_{z} layer is on the top and the bottom surface of the aluminum core, but not on the side surfaces thereof. If layers of silica or alumina are applied by a sol-gel process, the entire surface of the aluminum flake is coated with protective layers of silica or alumina. The sol-gel method comprises forming a sol through hydrolysis and poly-condensation of a solution of an organic metal compound or the like, followed by gelling it. Next, the resulting gel is heated to form a metal oxide. The organic metal compound includes silicon methoxides, ethoxides, propoxides, etc., such as tetramethoxysilane, tetraethoxysilane, tetraisopropoxysilane, methyl-triethoxysilane, dimethyl-dimethoxysilane, etc., and aluminum methoxides, ethoxides, propoxides, etc., for example, trimethoxyaluminate, triethoxyaluminate, tripropoxy-aluminate, etc. The amount of protective film my fall between 0.1 to 10 % by weight of the metal (core) coated with it.

Preferably, the entire surface of the flaky substrate is coated with the metal oxide and the entire surface of the metal oxide-coated flaky pigment is coated with the semi-transparent thin metal film. The sol-gel method is also preferred for applying the metal oxide coating. For example, when a titanium dioxide film is formed, the organic metal compound to be used may be titanium tetraalkoxides such as titanium tetramethoxide, titanium tetraethoxide, titanium tetrabutoxide, etc. For forming a zirconium oxide film, usable are zirconium tetraalkoxides such as zirconium tetraethoxide, zirconium tetrapropoxide, zirconium tetrabutoxide, etc. For forming a cerium oxide film, usable are cerium tetraalkoxides such as cerium tetramethoxide, cerium tetrapropoxide, etc. For forming a tin oxide film, usable are tin octylate, dibutyl-tin dilaurate, dioctyl-tin oxide, etc.

The semi-transparent thin metal film has a thickness of less than 50 nm. The semi-transparent thin metal film is formed of one or more metals selected from Ni, Zn, Cr, Co, Cu, Pt, Ag, Au, and alloys thereof. Examples of an alloy are Ni-Co, Ni-Fe, or Co-Fe. The thickness of the metal oxide coating is from 90 to 360 nm. The semi-transparent thin metal film is preferably apllied by a chemical plating method not requiring pretreatment for activation (Shikizai Kvokai-shi ("Journal of the Japan Society of Color Material"), 69 (6), 370-377 (1996)). In this, an acetylacetonato-metal complex is reduced in an organic solvent to thereby plate a substrate with the metal derived from the complex. For example, in the case of forming a nickel film on the metal oxide-coated flaky pigment substrate according to this plating method, using bis(acetylacetonato)nickel(II) and hydrazine as a reducing agent in a polar aprotic solvent, dimethylsulfoxide (DMSO), a dense nickel film may be formed on the substrate. In said aspect of the present invention Ni/TiO₂/SiO_{z} or Ni/TiO₂/SiO₂ aluminum flakes are preferred.

The aluminum flakes can be used in the applications that are customary for known aluminum flakes. Examples that may be mentioned are the use of the aluminum flakes according to the invention in paints, electrostatic coatings, in ink-jet printing, cosmetics, coatings, printing inks, plastics materials, in glazes for ceramics and glass and in security printing.

The process of the present invention is illustrated in more detail below on the basis of SiO_{z} coated aluminum flakes, but is not limited thereto.

The separating agent I is selected from anthracene, anthraquinone, acetamidophenol, acetylsalicylic acid, camphoric anhydride, benzimidazole, benzene-1,2,4-tricarboxylic acid, biphenyl-2,2-dicarboxylic acid, bis(4-hydroxyphenyl)sulfone, dihydroxyanthraquinone, hydantoin, 3-hydroxybenzoic acid, 8-hydroxyquinoline-5-sulfonic acid monohydrate, 4-hydroxycoumarin, 7-hydroxycoumarin, 3-hydroxynaphthalene-2-carboxylic acid, isophthalic acid, 4,4-methylene-bis-3-hydroxynaphthalene-2-carboxylic acid, naphthalene-1,8-dicarboxylic anhydride, phthalimide and its potassium salt, phenolphthalein, phenothiazine, saccharin and its salts, tetraphenylmethane, triphenylene, triphenylmethanol, and also mixtures of at least two of those substances, especially pentaerythritol (C(CH₂OH)₄), trimesic acid (= 1,3,5 bezene tricarboxylic acid), DL-alanine, DL-valine, 2,6-diaminopurine, ascorbic acid, 1,3,5-benzenetricarboxylic acid, o-acetylsalicyclic acid, diphenic acid, terephthalic acid, pyrogallol, cyanuric acid, hexamethyltetramine (urotropin), fumaric acid, and 4-acetylbenzoic acid and also mixtures of at least two of those substances.

The separating agent I is preferably pentaerythritol, which can be dissolved in water.

The separating agent II is selected from a polymer, especially a soluble, partly cured polymer, adamantane, diphenic acid, 7-hydroxycoumarin, benzoguanamine (2, 4, 6-diamino-4-phenyl-1, 3, 5-triazine), ferrocen, campher and derivatives, anthracene, naphtalene-1,8-dicarboxylic anhydride, 9,10-anthraquinone and pyromellitic dianhydride.

Examples of the polymer are the styrene resins described in WO00/24946 such as Dow 685D extrusion grade styrene resin, and the acrylates described in US-B-5945174, US-B-6010751, or US-B-5877895, such as 2-phenoxy ethyl acrylate, isobornyl acrylate and lauryl acrylate, dicetylene glycol diacrylate, neopentyl glycol diacrylate and polyethylene glycol diacrylate (PEGDA), or tetraethylene glycol diacrylate, trimethylol propane triacrylate and pentaerythritol triacrylate, isobutylmethacrylate, isobornyl methacrylate and 2-phenoxyethyl acrylate, triethylene glycol dimethacrylate, and 1,6-hexanediol dimethacrylate and mixtures of these compounds.

The layer thickness of the SiO_{z} layers (B1) and (B2) is from 10 to 50 nm, especially 20 to 30 nm.

The layer thickness of the layer (B) consisting of aluminum is from 10 to 100 nm, preferably from 30 to 50 nm.

The SiO_{y}-coated aluminum flakes can fundamentally be obtained by means of a process described, for example, in US-B-6,270,840, WO00/18978, WO02/090613, WO03/90613. The process of the present invention is characterized in that a separating agent I is used in combination with a separating agent II.

The silicon oxide layer (SiO_{y}) is formed preferably from silicon monoxide vapor produced in the vaporizer by reaction of a mixture of Si and SiO₂ at temperatures of more than 1300°C. A SiO_{y} layer with 0.70 ≤ y ≤ 0.99 is formed preferably by evaporating silicon monoxide containing silicon in an amount up to 20 % by weight at temperatures of more than 1300°C.

The Al is evaporated at temperatures of more than 1000°C.

The vapour-deposition in steps b) to d) is carried out preferably under a vacuum of < 0.5 Pa. The dissolution of the separating agent layer in step e) is carried but at a pressure in the range preferably from 1 to 5 x 10⁴ Pa, especially from 600 to 10⁴ Pa, and more especially from 10³ to 5 x 10³ Pa.

The SiO_{y} layers are obtained by heating a preferably stoichiometric mixture of fine silicon and quartz (SiO₂) powder in a vaporizer described, for example, in DE 43 42 574 C1 and in US-A-6 202 591 to more than 1300°C under a high vacuum. The reaction product is silicon monoxide gas, which under vacuum is directed directly onto the passing carrier, where it condenses as SiO. Non-stoichiometric mixtures may also be used. The vaporizer contains a charge comprising a mixture of Si and SiO₂, SiO_{y}, or a mixture thereof, the particle size of the substances that react with one another (Si and SiO₂) being advantageously less than 0.3 mm. The weight ratio of Si to SiO₂ is advantageously in the range from 0.15:1 to 0.75:1 (parts by weight); preferably, a stoichiometric mixture is present. SiO_{y} present in the vaporizer vaporizes directly. Si and SiO₂ react at a temperature of more than 1300°C to form silicon monoxide vapor.

Steps e) and f) are usually carried out at a pressure that is higher than the pressure in steps a) to d) and lower than atmospheric pressure.

The movable carrier may consist of one or more discs, cylinders or other rotationally symmetrical bodies, which rotate about an axis (cf. WO01/25500 and US-B-6,376,018), and consists preferably of one or more continuous metal belts with or without a polymeric coating or of one or more polyimide or polyethylene terephthalate belts (US-B-6,270,840).

The aluminum, or SiO_{y}-coated aluminum flakes are separated from the solvent of the separating agent I and II preferably by washing-out and subsequent filtration, sedimentation, centrifugation, decanting or evaporation.

A plurality of separating agent II and product layers may preferably be vapour-deposited in alternating sequence, one after the other, onto the movable carrier *in vacuo* before they are removed by dissolution in accordance with step e).

Furthermore, SiO_{y}-coated aluminum flakes may, after washing-out of the dissolved separating agent II contained in the solvent, be frozen together with the solvent and subsequently subjected to a process of freeze-drying, during which the solvent is separated off as a result of sublimation below the triple point and the dry flakes remain behind in the form of individual plane-parallel structures.

The condensed silicon suboxide corresponds to the formula SiO_{y}, with 0.95 ≤ y ≤ 1.8, preferably with about 1.0 ≤ y ≤ 1.6, y values of less than 1 being obtained by means of an excess of silicon in the vaporizer material. Except under an ultra-high vacuum, in industrial vacuums of a few 10⁻² Pa vaporized SiO always condenses as SiO_{y} with 1 ≤ y ≤ 1.8, especially with 1.1 ≤ y ≤ 1.6, because high-vacuum apparatuses always contain, as a result of gas emission from surfaces, traces of water vapor which react with the readily reactive SiO at vaporization temperature.
In detail, a separating agent I, for example pentaerythritol, followed by layers of a separating agent II, for example adamantane, silicon suboxide (SiO_{y}), Al ,SiO_{y} and a separating agent II, for example adamantane, are successively vapor-deposited onto a carrier, which may be a continuous metal belt, passing by way of the vaporizers under a vacuum of <0.5 Pa, especially <0.05 Pa. The vapor-deposited thicknesses of separating agent are approximately from 20 to 500 nm, preferably from 50 to 300 nm, most preferred from 50 to 100 nm, those of SiO are, depending on the intended use of the product, from 10 to 500 nm, and those of aluminum are from 10 to 100 nm, especially 30 to 50 nm. On its further course, the belt-form carrier, which is closed to form a loop, runs through dynamic vacuum lock chambers of known construction (cf. US-B-6,270,840) into a region of from 1 to 5 x 10⁴ Pa pressure, preferably from 600 to 10⁹ Pa pressure, and especially from 10³ to 5 x 10³ Pa pressure, where it is contacted with a separating bath. The temperature of the water, which is used to dissolve separating agent I, should be so selected that its vapor pressure is in the indicated pressure range. With mechanical assistance, the layer of separating agent I rapidly dissolves and the plane-parallel platelet precursor layer breaks up into flakes, which are then in the form of a suspension in water.

The suspension then obtained in both cases, comprising the plane-parallel platelet precursor structures and solvent with separating agent dissolved therein, is then separated in a further operation in accordance with a known technique. For that purpose, the plane-parallel platelet precursor structure is first concentrated in water and rinsed several times with fresh water in order to wash out the dissolved separating agent. The product, in the form of a solid that is still wet, is then separated off by means of filtration, sedimentation, centrifugation, decanting or evaporation, and is dried.

The plane-parallel platelet precursor structures are then contacted with a second Separating bath, wherein the separating agent II, for example adamantane, still adhering to the plane-parallel platelet precursor structures is dissolved in an organic solvent, for example toluene, or benzene. The suspension then obtained in both cases, comprising the plane-parallel structures and solvent with separating agent dissolved therein, is then separated in a further operation in accordance with a known technique. For that purpose, the plane-parallel platelet structure is first concentrated in the solvent and rinsed several times with fresh solvent in order to wash out the dissolved separating agent. The product, in the form of a solid that is still wet, is then separated off by means of filtration, sedimentation, centrifugation, decanting or evaporation, and is dried.

Separating off the plane-parallel structures after washing-out at atmospheric pressure can be carried out under gentle conditions by freezing the suspension, which has been concentrated to a solids content of approximately 50 %, and subjecting it in known manner to freeze-drying at approximately -10°C and 50 Pa pressure. The dry substance remains behind as product.

The SiO_{y}-coated aluminum flakes can optionally be subjected to oxidative heat treatment. For example, air or some other oxygen-containing gas is passed through the platelets, which are in the form of loose material or in a fluidized bed, at a temperature of more than 200°C, preferably more than 400°C and especially from 400 to 600°C.

Comminution of the fragments of film to pigment size can be effected, for example, by means of ultrasound or by mechanical means using high-speed stirrers in a liquid medium, or after drying the fragments in an air-jet mill having a rotary classifer. Depending on whether the pigment comminution is carried out in a liquid medium or in the dry state, passivation of the free metal surfaces of the aluminum pigment is carried out either during the comminution procedure, or following that procedure, by means of one of the above-mentioned processes.

It is also possible for the aluminum flakes or pigments to be subjected to after-coating or after-treatment, which further increases stability to light, weathering and chemicals or facilitates handling of the pigment, especially incorporation into various media. The processes described in EP-A-1084198, EP-A-826745, DE-A-22 15 191, DE-A-31 51 354, DE-A-32 35 017 or DE-A-33 34 598, for example, are suitable as after-treatment or after-coating.

Where appropriate, an SiO₂ protective layer can be applied, for which the following method may be used: a soda waterglass solution is metered into a suspension of the material being coated, which suspension has been heated to about 50-100°C, especially 70-80°C. The pH is maintained at from 4 to 10, preferably from 6.5 to 8.5, by simultaneously adding 10 % hydrochloric acid. After addition of the waterglass solution, stirring is carried out for 30 minutes.

The pigments are distinguished by having a very uniform thickness.
The term "SiO_{z} with 0.70 ≤ z ≤ 2.0" means that the molar ratio of oxygen to silicon at the average value of the silicon oxide layer is from 0.70 to 2.0. The composition of the silicon oxide layer can be determined by ESCA (electron spectroscopy for chemical analysis). The stoichiometry of silicon and oxygen of the silicon oxide substrate can be determined by RBS (Rutherford-Backscattering).

The term "SiO_{y} with 0.70 ≤ y ≤ 1.95" means that the molar ratio of oxygen to silicon at the average value of the silicon oxide layer is from 0.70 to 1.95. The composition of the silicon oxide layer can be determined by ESCA (electron spectroscopy for chemical analysis). The stoichiometry of silicon and oxygen of the silicon oxide substrate can be determined by RBS (Rutherford-Backscattering).

According to the present invention the term "aluminum" comprises aluminum and alloys of aluminum. Alloys of aluminum are, for example, described in G. Wassermann in Ullmanns Enzyklopädie der Industriellen Chemie, 4. Auflage, Verlag Chemie, Weinheim, Band 7, S. 281 to 292. Especially suitable are the corrosion stable aluminum alloys described on page 10 to 12 of WO00/12634, which comprise besides aluminum silicon, magnesium, manganese, copper, zinc, nickel, vanadium, lead, antimony, tin, cadmium, bismuth, titanium, chromium and/or iron in amounts of less than 20 % by weight, preferably less than 10 % by weight.

In an embodiment of the present invention the apparatus and method described in US-A-4,321,087 is used for the preparation of the plan-parallel structures. Said embodiment is described on the basis of aluminum flakes, but is not limited thereto.

In a discontinuous process, if necessary, a surface coating (typical resin systems used are acrylics, cellulose systems, vinyl resins etc.) is applied to at least on side of a carrier sheet by a coating or printing technique (preferably rotogravure or flexo). Suitable carriers are films consisting of polyesters, polyolefins or other common materials.

The coated film is then passed through a roll coater where subsequently layers of separating agents I, II, aluminum layer and separating agent II are vapor-deposited on the release-coat in a typical PVD (Physical Vapor Deposition) process.

The thickness of the deposited aluminum is critical to obtain the desired properties of the final pigments. Usually, the thickness is adjusted between 30 and 50 nm. At a thickness above 50 nm the orientation ability of the pigments is negatively influenced and the scattering effects at the edges of the pigments increase. Both effects have a negative impact on brilliance, opacity and flop.

At a thickness below 30 nm the aluminum becomes transparent and handling of the pigments is more difficult due to higher agglomeration tendencies.

In the next step the metalized film runs through a first solvent tank (stripper) were the separating agent I is dissolved in water and the layers of aluminum and separating agent II are removed as coarse precursor flakes.

The aluminum precursor flakes are separated from the separating agent solvent preferably by washing-out and subsequent filtration, sedimentation, centrifugation, decanting or evaporation.

The separating agent II of the aluminum precursor flakes is dissolved in an appropriate solvent and the aluminum flakes are separated from the separating agent solvent preferably by washing-out and subsequent filtration, sedimentation, centrifugation, decanting or evaporation. Alternatively, the aluminium particles are washed and concentrated if desired to a dispersion normally containing 10 to 20% pigment. The particles are then sized by vigorous stirring or ultrasonic treatment.

The separating agent I is preferably pentaerythritol, which can be dissolved in water. The separating agent II is preferably adamantane, which can be dissolved in toluene.

In a preferred embodiment of the present invention the apparatus described in US-B-6,270,840 is used for the preparation of the plan-parallel structures. Said embodiment is described on the basis of SiO_{y} flakes, but is not limited thereto.

The SiO_{y} flakes are, in principal, prepared by a process comprising the steps:
a) deposition of a separating agent I, which is dissolvable in water, onto a carrier to produce a separating agent layer,
b) vapour-deposition of a separating agent II, which is not dissolvable in water, onto the separating agent layer of step a),
c) vapour-deposition of a SiO_{y} layer onto the separating agent layer of step b), and
d) vapour-deposition of a separating agent II, which is not dissolvable in water, onto the product layer of step c),
e) dissolution of the separating agent layer of step a) in water and production of a suspension in which the SiO_{y} layer is present in the form of plane-parallel platelets, the top surface and the bottom surface, but not the side surfaces of which are covered by the separating agent I, and
f) dissolution of the separating agent layer of steps b) and d) in a solvent and production of a suspension in which the SiO_{y} is present in the form of plane-parallel platelets.

In accordance with said embodiment a separating agent I, for example pentaerythritol, followed successively by a layer of separating agent II, for example adamantane, and silicon monoxide (SiO) is vapour-deposited onto a carrier, which is a continuous (metal) belt, passing by way of the vaporisers under a vacuum of < 0.5 Pa. The thicknesses of the separating agents I and II vapour-deposited are greater than about 50 nm, especially 50 to 300 nm, those of the SiO from 20 to 2000 nm depending upon the intended purpose of the product.

Layer thicknesses of more than 100 nm result in substantial heating of the film carrier in the case of SiO vapour-deposition, which results in softening and thermal degradation if the glass transition temperature of the plastics film is exceeded. It has therefore proved advantageous to use a metallic carrier which withstands such loading.

Except under an ultra-high vacuum, in technical vacuums of a few 10⁻² Pa vaporised SiO always condenses as SiO_{y} wherein 1 ≤ y < 1.8, especially wherein 1.1 < y < 1.8, because high-vacuum apparatuses always contain, as a result of gas emission from surfaces, traces of water vapour which react with the readily reactive SiO at vaporisation temperature.

On its further course, the belt-form carrier (cf. US6270840), which is closed to form a loop, runs through dynamic vacuum lock chambers of known mode of construction into a region of from 1 to 5 x 10⁴ Pa pressure, preferably from 600 to 10⁴ Pa pressure, and especially from 10³ to 5 x 10³ Pa pressure, where it is immersed in a dissolution bath. The temperature of the solvent (water) should be so selected that its vapour pressure is in the indicated pressure range. With mechanical assistance, the layer of separating agent I rapidly dissolves and the "product" layer breaks up into plan-parallel platelet precursors (flakes consisting of product and separating agent II), which are then present in the solvent in the form of a suspension. On its further course, the belt is dried and freed from any contaminants still adhering to it. It runs through a second group of dynamic vacuum lock chambers back into the vaporisation chamber, where the process of coating with separating agents and product layer of SiO is repeated.

The suspension then present in both cases, comprising product precursor structures and solvent, and the separating agent I dissolved therein, is then separated in a further operation in accordance with a known technique. For that purpose, the product precursor structures are first concentrated in the liquid and rinsed several times with fresh solvent in order to wash out the dissolved separating agent I. The product precursor, in the form of a solid that is still wet, is then separated off by filtration, sedimentation, centrifugation, decanting or evaporation.

The product precursors are converted to SiO_{y} flakes by dissolving the second separating agent in an appropriate solvent, for example toluene, or benzene. The SiO_{y} flakes are first concentrated in the liquid and rinsed several times with fresh solvent in order to wash out the dissolved separating agent II. The SiO_{y} flakes in the form of a solid that is still wet, are then separated off by filtration, sedimentation, centrifugation, decanting or evaporation.

Then, after drying, the product can be subjected to oxidative heat treatment. Known methods are available for that purpose. Air or some other oxygen-containing gas is passed through the plane-parallel structures of SiO_{y} wherein y is, depending on the vapour-deposition conditions, from 1 to about 1.8, which are in the form of loose material or in a fluidised bed, at a temperature of more than 200°C, preferably more than 400°C and especially from 500 to 1000°C. The product can then be brought to the desired particle size by means of grinding or air-sieving and delivered for further use.

In the production of plane-parallel structures of SiO_{y}, variants are possible:
It is possible to arrange several separating agent and product vaporisers one after the other in the running direction of the belt in the vaporisation zone. By that means there is obtained, with little additional outlay in terms of apparatus, a layer sequence of SI + SII + P + SII + P + SII, wherein SI is the layer of separating agent I and SII is the layer of separating agent II and P is the product layer. If the number of vaporisers is doubled and the belt speed is the same, twice the amount of product is obtained.

Silicon monoxide is produced from silicon and silicon dioxide by means of the reaction

Si + SiO2 → 2 SiO

at more than 1300°C, preferably from 1300°C to 1600°C, *in vacuo*, is combined in accordance with the invention with the vaporisation of SiO. In vaporisers specifically set up for the purpose, a preferably stoichiometric mixture of fine silicon and quartz powder is heated to, for example, about 1450°C under a high vacuum. The reaction product is silicon monoxide gas. Instead of collecting the silicon monoxide and grinding it in order for it then to be vaporised at a later stage, the silicon monoxide vapour resulting from the chemical reaction *in vacuo* is directed directly onto the passing carrier, where it condenses as SiO_{y}. Separate production of SiO in a separate step is therefore not necessary. It is also possible to use non-stoichiometric mixtures. However, residues of either SiO₂ or Si are left after the reaction.

In accordance with the invention, the vaporiser contains a charge comprising a mixture of Si and SiO₂, SiO_{y}, or a mixture thereof, the particle size of the substances that react with one another (Si and SiO₂ being advantageously less than 0.3 mm. The weight ratio of Si to SiO₂ is advantageously in the range from 0.15:1 to 0.75:1 (parts by weight); preferably, a stoichiometric mixture is present. The amount of SiO_{y} may be selected in accordance with practical requirements. SiO_{y} present in the vaporiser vaporises directly. Si and SiO₂ react at a temperature of more than 1300°C to form silicon monoxide vapour. The ratio of the thickness to the surface area of the plane-parallel structures is preferably less than 0.01 µm⁻¹. The separating agent condensed onto the carrier may be a water-soluble inorganic salt vaporisable *in vacuo* or a soluble organic substance vaporisable *in vacuo.*

In accordance with the invention, steps e) and f) are carried out at a pressure that is higher than the pressure in steps a) to d) and lower than atmospheric pressure.

The movable carrier preferably comprises one or more continuous metal belts, with or without a polymer coating, or one or more polyimide or polyethylene terephthalate belts.

In accordance with a preferred embodiment of the invention, a plurality of separating agent layers and silicon suboxide layers in alternating succession are vapour-deposited onto the movable carrier *in vacuo*, before being removed by dissolution of the condensed separating agent layers. The plane-parallel structures of SiO_{y} are separated from the separating agent solvent preferably by washing-out and subsequent filtration, sedimentation, centrifugation, recanting or evaporation.

The silicon suboxide condensed onto the movable carrier corresponds to the formula SiO_{y} wherein 1 ≤ y ≤ 1.8, preferably wherein 1.15 ≤ y ≤ 1.6. It is also possible, by using an excess of silicon in the vaporiser material, to obtain y values of less than 1, down to y = 0.95.

In the production method described hereinbefore, further vaporisable substances such as organic pigments, especially metals or metal oxides are preferably admixed with the silicon suboxide with the aim of providing the plane-parallel structures of silicon oxide with optically absorbing properties, it being possible for admixture to be effected either in the solid phase or in the vapour phase by means of vaporisation from a second source.

If instead of the product alone SiO_{y} and the separating agent II are simultaneously vapor-deposited onto a separating agent layer II, porous SiO_{y} flakes can be obtained (for more details see WO04/065295).

The porous SiO_{y} flakes are produced by depositing a mixed layer of SiOy/separating agent II on a layer of separating agent II. By controlling the amount of separating agent II in the mixed layer the porosity of the SiO_{y} flakes can be controlled in a simple manner.

In general, the mixed layer contains the separating agent II in an amount of 1 to 60 % by weight based on the total weight of SiO_{y} and separating agent II.

If the SiO_{y} flakes are heated in an oxygen-free atmosphere, i.e. an argon or helium atmosphere or in a vacuum of less than 13 Pa (10⁻¹ Torr), at a temperature above 400 °C, especially 400 to 1100°C, "silicon/silicon oxide" flakes are obtained (for more details see WO03/106569).

It is assumed that by heating SiO_{y} particles in an oxygen-free atmosphere, SiO_{y} disproportionates in SiO₂ and Si:

SiO_{y} → (y/y+a) SiO_{y+a} + (1 - y/y+a) Si

In this disproportion SiO_{y+a} flakes are formed, containing (1 - (y/y+a)) Si, wherein 0.70 ≤ y ≤ 1.8, especially 0.70 ≤ y ≤ 0.99 or 1 ≤ y ≤ 1.8, 0.05 ≤ a ≤ 1.30, and the sum y and a is equal or less than 2.

SiO_{y} flakes with 0.70 ≤ y ≤ 1.95, especially 0.70 ≤ y ≤1.80, very especially 1.0 ≤ y ≤ 1.8, comprise reactive centres. The term "reactive centre" means, that at least one Si-Si group, preferably Si-Si groups, i.e. [SiO₄₋ₓSiₓ] components (x ≥ 1) within the SiO_{y} flakes are present. The reactive SiO_{y} flakes can, for example be reacted with compounds having functional groups that can cleave a Si-Si group, to chemically bond the compounds to the SiO_{y} flakes (for more details see WO006/010720).

SiO_{y} with y > 1.0 can be obtained by evaporation of SiO in the presence of oxygen. Layers, which are essentially free of absorption, can be obtained, if the growing SiO_{y} layer is irradiated with UV light during evaporation (DE-A-1621214). It is possible to obtain SiO_{1.5} layers, which do not absorb in the visible region and have a refractive index of 1.55 at 550 nm, by so-called "reactive evaporation" of SiO in a pure oxygen atmosphere (E. Ritter, J. Vac. Sci. Technol. 3 (1966) 225).

The SiO_{y} flakes may be oxidised using an oxygen-containing gas such as, for example, air at a temperature of at least 200°C, especially at above 400°C, preferably in the form of loose material, in a fluidised bed or by introduction into an oxidising flame, preferably at a temperature in the range from 500 to 1000°C, to form plane-parallel structures of SiO_{z} (WO03/068868).

The SiO_{z} flakes can be, for example, further processed to interference pigments by applying further layers.

Such pigments, the particles of which generally have a length of from 2 µm to 5 mm, a width of from 2 µm to 2 mm, and a thickness of from 20 nm to 2 µm, and a ratio of length to thickness of at least 2: 1, wherein the particles contain a core of SiO_{z} with 0.70 ≤ z ≤ 2.0, especially 1.1 ≤ z ≤ 2.0, most preferred 1.4 ≤ z ≤ 2.0, having two substantially parallel faces, the distance between which is the shortest axis of the core (thickness), comprise (a) a material, especially a metal oxide, having a high index of refraction, or the pigments comprise
(a) a (thin semi-transparent) metal layer.

Suitable metals for the semi-transparent metal layer are, for example, Cr, Ti, Mo, W, Al, Cu, Ag, Au, or Ni. The semi-transparent metal layer has typically a thickness of between 5 and 25 nm, especially between 5 and 15 nm. The SiO_{z} substrates can have a metal layer only on one parallel surface, but preferably the metal layer is present on both parallel faces of the substrate.

If semi-transparent metal layers are desired, the thickness of the metal layer is generally between 5 and 25 nm, especially between 5 and 15 nm.

If pigments with metallic appearance are desired, the thickness of the metal layer is > 25 nm to 100 nm, preferably 30 to 50 nm. If pigments with colored metal effects are desired, additional layers of colored or colorless metal oxides, metal nitrides, metal sulfides and/or metals can be deposited. These layers are transparent or semi-transparent. It is preferred that layers of high index of refraction and layers of low index of refraction alternate or that one layer is present, wherein within the layer the index of refraction is gradually changing. It is possible for the weathering resistance to be increased by means of an additional coating, which at the same time causes an optimal adaption to the binder system (EP-A-268918 and EP-A-632109 ).

In one preferred embodiment of the present invention, the interference pigments comprise materials having a "high" index of refraction, which is defined herein as an index of refraction of greater than about 1.65, and optionally materials having a "low" index of refraction, which is defined herein as an index of refraction of about 1.65 or less. Various (dielectric) materials that can be utilized including inorganic materials such as metal oxides, metal suboxides, metal fluorides, metal oxyhalides, metal sulfides, metal chalcogenides, metal nitrides, metal oxynitrides, metal carbides, combinations thereof, and the like, as well as organic dielectric materials. These materials are readily available and easily applied by physical, or chemical vapor deposition processes, or by wet chemical coating processes.

In an especially preferred embodiment, the interference pigments on the basis of the silicon oxide substrate comprises a further layer of a dielectric material having a "high" refractive index, that is to say a refractive index greater than about 1.65, preferably greater than about 2.0, most preferred greater than about 2.2, which is applied to the entire surface of the silicon/silicon oxide substrate. Examples of such a dielectric material are zinc sulfide (ZnS), zinc oxide (ZnO), zirconium oxide (ZrO₂), titanium dioxide (TiO₂), carbon, indium oxide (In₂O₃), indium tin oxide (ITO), tantalum pentoxide (Ta₂O₅), chromium oxide (Cr₂O₃), cerium oxide (CeO₂), yttrium oxide (Y₂O₃), europium oxide (Eu₂O₃), iron oxides such as iron(II)/iron(III) oxide (Fe₃O₄) and iron(III) oxide (Fe₂O₃), hafnium nitride (HfN), hafnium carbide (HfC), hafnium oxide (HfO₂), lanthanum oxide (La₂O₃), magnesium oxide (MgO), neodymium oxide (Nd₂O₃), praseodymium oxide (Pr₆O₁₁), samarium oxide (Sm₂O₃), antimony trioxide (Sb₂O₃), silicon monoxides (SiO), selenium trioxide (Se₂O₃), tin oxide (SnO₂), tungsten trioxide (WO₃) or combinations thereof. The dielectric material is preferably a metal oxide. It being possible for the metal oxide to be a single oxide or a mixture of oxides, with or without absorbing properties, for example, TiO₂, ZrO₂, Fe₂O₃, Fe₃O₄, Cr₂O₃, CeO₂, or ZnO, with TiO₂ being especially preferred.

It is possible to obtain pigments that are more intense in colour and more transparent by applying, on top of the TiO₂ layer, a metal oxide of low refractive index, such as SiO₂, Al₂O₃, AIOOH, B₂O₃ or a mixture thereof, preferably SiO₂, and optionally applying a further TiO₂ layer on top of the latter layer (EP-A-892832, EP-A-753545, WO93/08237, WO98/53011, WO9812266, WO9838254, WO99/20695, WO00/42111, and EP-A-1213330). Nonlimiting examples of suitable low index dielectric materials that can be used include silicon dioxide (SiO₂), aluminum oxide (Al₂O₃), and metal fluorides such as magnesium fluoride (MgF₂), aluminum fluoride (AlF₃), cerium fluoride (CeF₃), lanthanum fluoride (LaF₃), sodium aluminum fluorides (e.g., Na₃AlF₆ or Na₅Al₃F₁₄), neodymium fluoride (NdF₃), samarium fluoride (SmF₃), barium fluoride (BaF₂), calcium fluoride (CaF₂), lithium fluoride (LiF), combinations thereof, or any other low index material having an index of refraction of about 1.65 or less. For example, organic monomers and polymers can be utilized as low index materials, including dienes or alkenes such as acrylates (e.g., methacrylate), polymers of perfluoroalkenes, polytetrafluoroethylene (TEFLON), polymers of fluorinated ethylene propylene (FEP), parylene, p-xylene, combinations thereof, and the like. Additionally, the foregoing materials include evaporated, condensed and cross-linked transparent acrylate layers, which may be deposited by methods described in U.S. Pat. No. 5,877,895, the disclosure of which is incorporated herein by reference.

Accordingly, preferred interference pigments comprise besides (a) a metal oxide of high refractive index in addition and (b) a metal oxide of low refractive index, wherein the difference of the refractive indices is at least 0.1.

Pigments on the basis of silicon oxide (SiO_{z}) substrates, which have been coated by a wet chemical method, in the indicated order are particularly preferred:
TiO₂ (substrate: silicon oxide; layer: TiO₂, preferably in the rutile modification), (SnO₂)TiO₂, Fe₂O₃, Fe₃O₄, TiFe₂O₅, Cr₂O₃, ZrO₂, Sn(Sb)O₂, BiOCl, Al₂O₃, Ce₂S₃, MoS₂, Fe₂O₃•TiO₂ (substrate: silicon oxide; mixed layer of Fe₂O₃ and TiO₂), Ti0₂/Fe₂O₃ (substrate: silicon oxide; first layer: TiO₂; second layer: Fe₂O₃), TiO₂/Berlin blau, TiO₂/Cr₂O₃, orTiO₂/FeTiO₃. In general the layer thickness ranges from 1 to 1000 nm, preferably from 1 to 300 nm.

In another particularly preferred embodiment the present invention relates to interference pigments containing at least three alternating layers of high and low refractive index, such as, for example, TiO₂/SiO₂/TiO₂, (SnO₂)TiO₂/SiO₂/TiO₂, TiO₂/SiO₂/TiO₂/SiO₂/TiO₂ or TiO₂/SiO₂/Fe₂O₃: Preferably the layer structure is as follows:
(A) a coating having a refractive index > 1.65,
(B) a coating having a refractive index ≤ 1.65,
(C) a coating having a refractive index > 1.65, and
(D) optionally an outer protective layer.

The thickness of the individual layers of high and low refractive index on the base substrate is essential for the optical properties of the pigment. The thickness of the individual layers, especially metal oxide layers, depends on the field of use and is generally 10 to 1000 nm, preferably 15 to 800 nm, in particular 20 to 600 nm.

The thickness of layer (A) is 10 to 550 nm, preferably 15 to 400 nm and, in particular, 20 to 350 nm. The thickness of layer (B) is 10 to 1000 nm, preferably 20 to 800 nm and, in particular, 30 to 600 nm. The thickness of layer (C) is 10 to 550 nm, preferably 15 to 400 nm and, in particular, 20 to 350 nm.

Particularly suitable materials for layer (A) are metal oxides, metal sulfides, or metal oxide mixtures, such as TiO₂, Fe₂O₃, TiFe₂O₅, Fe₃O₄, BiOCl, CoO, Co₃O₄, Cr₂O₃, VO₂, V₂O₃, Sn(Sb)O₂, SnO₂, ZrO₂, iron titanates, iron oxide hydrates, titanium suboxides (reduced titanium species having oxidation states from 2 to <4), bismuth vanadate, cobalt aluminate, and also mixtures or mixed phases of these compounds with one another or with other metal oxides. Metal sulfide coatings are preferably selected from sulfides of tin, silver, lanthanum, rare earth metals, preferably cerium, chromium, molybdenum, tungsten, iron, cobalt and/or nickel.

Particularly suitable materials for layer (B) are metal oxides or the corresponding oxide hydrates, such as SiO₂, MgF₂, Al₂O₃, AIOOH, B₂O₃ or a mixture thereof, preferably SiO₂.

Particularly suitable materials for layer (C) are colorless or colored metal oxides, such as TiO₂, Fe₂O₃, TiFe₂O₅, Fe₃O₄, BiOCl, CoO, Co₃O₄, Cr₂O₃, VO₂, V₂O₃, Sn(Sb)O₂, SnO₂, ZrO₂, iron titanates, iron oxide hydrates, titanium suboxides (reduced titanium species having oxidation states from 2 to <4), bismuth vanadate, cobalt aluminate, and also mixtures or mixed phases of these compounds with one another or with other metal oxides. The TiO₂ layers can additionally contain an absorbing material, such as carbon, selectively absorbing colorants, selectively absorbing metal cations, can be coated with absorbing material, or can be partially reduced.

Interlayers of absorbing or nonabsorbing materials can be present between layers (A), (B), (C) and (D). The thickness of the interlayers is 1 to 50 nm, preferably 1 to 40 nm and, in particular, 1 to 30 nm.
In this embodiment preferred interference pigments have the following layer structure:

| Core | Layer (A) | Layer (B) | Layer (C) |
|---|---|---|---|
| SiO_{z} | TiO₂ | SiO₂ | TiO₂ |
| SiO_{z} | TiO₂ | SiO₂ | Fe₂O₃ |
| SiO_{z} | TiO₂ | SiO₂ | TiO₂/Fe₂O₃ |
| SiO_{z} | TiO2 | SiO | (Sn,Sb)O₂ |
| SiO_{z} | (Sn,Sb)O₂ | SiO₂ | TiO₂ |
| SiO_{z} | Fe₂O₃ | SiO₂ | (Sn,Sb)O₂ |
| SiO_{Z} | TiO₂/Fe₂O₃ | SiO₂ | TiO₂/Fe₂O₃ |
| SiO_{z} | TiO₂. | SiO₂ | MoS₂ |
| SiO_{z} | TiO₂ | SiO₂ | Cr₂O₃ |
| SiO_{z} | Cr₂O₃ | SiO₂ | TiO₂ |
| SiO_{z} | Fe₂O₃ | SiO₂ | TiO₂ |
| SiO_{z} | TiO₂ | Al₂O₃ | TiO₂ |
| SiO_{z} | Fe₂TiO₅ | SiO₂ | TiO₂ |
| SiO_{z} | TiO₂ | SiO₂ | Fe₂ TiO₅/ TiO₂ |
| SiO_{z} | TiO suboxides | SiO₂ | TiO suboxides |
| SiO_{z} | TiO₂ | SiO₂ | TiO₂ + SiO₂ + TiO₂ + Prussian Blue |
| SiO_{z} | TiO₂ | SiO₂ | TiO₂ + SiO₂ + TiO₂ |
| SiO_{z} | TiO₂+SiO₂+ TiO₂ | SiO₂ | TiO₂ + SiO₂ + TiO₂ |

The pigments are characterized by the precisely defined thickness and smooth surface of the thin SiO_{z} flakes.

Layers of oxides of the metals zirconium, titanium, iron and zinc, oxide hydrates of those metals, iron titanates, titanium suboxides or mixtures thereof are preferably applied by precipitation by a wet chemical method, it being possible, where appropriate, for the metal oxides to be reduced. Layers of the metal oxides are preferably applied by wet chemical coating, wherein the wet chemical coating methods developed for the production of pearlescent pigments may be used; these are described, for example, in DE-A-14 67 468, DE-A-19 59 988, DE-A-20 09 566, DE-A-22 14 545, DE-A-22 15 191, DE-A-22 44 298, DE-A-23 13 331, DE-A-25 22 572, DE-A-31 37 808, DE-A-31 37 809, DE-A-31 51 343, DE-A-31 51 354, DE-A-31 51 355, DE-A-32 11 602 and DE-A-32 35 017, DE 195 99 88, WO 93/08237, WO 98/53001 and WO03/6558.

The metal oxide of high refractive index is preferably TiO₂ and/or iron oxide, and the metal oxide of low refractive index is preferably SiO₂. Layers of TiO₂ can be in the rutile or anastase modification, wherein the rutile modification is preferred. TiO₂ layers can also be reduced by known means, for example ammonia, hydrogen, hydrocarbon vapor or mixtures thereof, or metal powders, as described in EP-A-735,114, DE-A-3433657, DE-A-4125134, EP-A-332071, EP-A-707,050 or WO93/19131.

The metal oxide layers are also obtainable, for example, in analogy to a method described in DE-A-195 01 307, by producing the metal oxide layer by controlled hydrolysis of one or more metal acid esters, where appropriate in the presence of an organic solvent and a basic catalyst, by means of a sol-gel process. Suitable basic catalysts are, for example, amines, such as triethylamine, ethylenediamine, tributylamine, dimethylethanolamine and methoxypropylamine. The organic solvent is a water-miscible organic solvent such as a C₁₋₄alcohol, especially isopropanol.

Alternatively, the SiO_{y} flakes can be heated in an oxygen-free atmosphere such as, for example, argon and/or helium or under a vacuum of less than 13 Pa (10⁻¹ Torr) at a temperature of at least 400°C, especially at above 400°C, preferably in the form of loose material, in a fluidised bed, preferably at a temperature in the range from 900 to 1100°C, to form the silicon/silicon oxide flakes. The silicon/silicon oxide flakes can be used instead of the SiO_{z} flakes as substrate for effect pigments (WO03/106569).

Alternatively, the process of the present invention can be used to produce porous SiO_{z} flakes described in WO04/065295.

The process of the present invention can also be used to prepare the following pigments, described in (WO03/106569), comprising in this order:
(a2) a silicon/silicon oxide layer obtainable by heating a SiO_{0.70-0}.₉₉ layer in an oxygen-free atmosphere at a temperature above 400°C,
(b2) a silicon/silicon oxide layer obtainable by heating a SiO₁.₀₀₋₁.₈ layer in an oxygen-free atmosphere at a temperature above 400 °C, and
(c2) a silicon/silicon oxide layer obtainable by heating a SiO₀.₇₀₋₀.₉₉ layer in an oxygen-free atmosphere at a temperature above 400 °C and optionally further layers.

The SiO₁.₀₀₋₁.₈ layer is formed preferably from silicon monoxide vapour produced in the vaporiser by reaction of a mixture of Si and SiO₂ at temperatures of more than 1300°C.

The SiO_{0.70-0.99} layer is formed preferably by evaporating silicon monoxide containing silicon in an amount up to 20 % by weight at temperatures of more than 1300°C.

It is possible, for example, for the weathering resistance to be increased by means of an additional protective layer, from 2 to 250 nm thick (preferably from 10 to 100 nm thick), of an inorganic dielectric having a refractive index ≤ 1.6 (such as SiO₂, SiO(OH)₂ etc.).

The thickness of layer (b2) is generally 50 to 400 nm, especially 50 to 300 nm.

The thickness of layers (a2) and (c2) is generally 50 to 200 nm, especially 50 to 100 nm.

In addition, the flakes can be subjected to oxidative heat treatment in air or some other oxygen-containing gas at a temperature of more than 200°C, preferably more than 400°C and especially from 500 to 1000°C.

In an analogous manner pigments are available, comprising in this order:
(a3) a silicon/silicon oxide layer obtainable by heating a SiO_{1.00-1.8} layer in an oxygen-free atmosphere at a temperature above 400 °C,
(b3) a silicon/silicon oxide layer obtainable by heating a SiO₀.₇₀₋₀.₉₉ layer in an oxygen-free atmosphere at a temperature above 400 °C, and
(c3) a silicon/silicon oxide layer obtainable by heating a Sio₁._{00-1.8} layer in an oxygen-free atmosphere at a temperature above 400 °C and optionally further layers (the thickness of layer (b2) is generally 50 to 400 nm, especially 100 to 300 nm; the thickness of layers (a3) and (c3) is generally 50 to 200 nm, especially 50 to 100 nm);

If, under industrial vacuums of a few 10⁻² Pa, Si is vaporised (instead of Si/SiO₂ or SiO/Si) silicon oxides can be obtained which have an oxygen content of less than 0.70, that is to say SiOₓ wherein 0.03 ≤ x ≤ 0.69, especially 0.05 ≤ x ≤ 0.50, very especially 0.10 ≤ x ≤ 0.30 (WO03/076520).

Accordingly, in a further preferred embodiment, the pigments comprise in this order:
(a4) a silicon/silicon oxide layer obtainable by heating a SiO₀.₀₃₋₀.₆₉ layer in an oxygen-free atmosphere at a temperature above 400 °C,
(b4) a silicon/silicon oxide layer obtainable by heating a SiO_{1.00-1.8} layer in an oxygen-free atmosphere at a temperature above 400 °C, and
(c4) a silicon/silicon oxide layer obtainable by heating a SiO₀.₀₃₋₀.₆₉ layer in an oxygen-free atmosphere at a temperature above 400 °C, and optionally further layers, or
the pigments comprise in this order:
(a5) a silicon/silicon oxide layer obtainable by heating a SiO₀.₀₃₋₀.₆₉ layer in an oxygen-free atmosphere at a temperature above 400 °C,
(b5) a silicon/silicon oxide layer obtainable by heating a SiO_{0.70-0.99} layer in an oxygen-free atmosphere at a temperature above 400 °C, and
(c5) a silicon/silicon oxide layer obtainable by heating a SiO₀.₀₃₋₀.₆₉ layer in an oxygen-free atmosphere at a temperature above 400 °C, and optionally further layers.

Heating in the presence of oxygen at from 150 to 500°C, preferably from 175 to 300°C, unexpectedly results in a very thin, e.g. approximately 20 nm thick, superficial silicon dioxide layer, which represents a very convenient method of producing structures having the layer sequence SiO₂/(a4)/(b₄)/(c4)/SiO₂, or SiO₂/(a5)/(b5)/(c5)/SiO₂.

The invention also relates to the use of the pigments based on the SiO_{z} flakes according to the invention in paints, textiles, ink-jet printing, cosmetics, printing inks, plastics materials, coatings, especially in automotive finishes, in glazes for ceramics and glass, and in security printing (see, for example, WO04/035693).

In addition, the apparatus described in US6376018 and WO01/025500 can, in principal, be used for the production of the plan-parallel structure.

Such an apparatus, adapted to the process of the present invention, comprises:
a rigid carrier rotatable about an axis and located in a vacuum chamber,
means for coating a partial surface of said carrier with at least one product layer,
means for coating said carrier with layers of separating agents I and II prior to application of said product layer,
means for stripping said product layer from said partial surface of said carrier by dissolving said the layer of separating agent I in such a way that plane-parallel platelet precursors are produced, wherein
transport of said partial surface between said coating means and said stripping means being effected through rotation of said carrier.
Said carrier is preferably located in a vacuum chamber and an intermediate separation for creating two pressure stages is provided between said means for coating with said product and separating agent layers and said stripping means.
The carrier comprises an open or closed, rotationally symmetrical, rigid body.
The carrier comprises several open or closed, rotationally symmetrical, rigid bodies which rotate about a common axis or about several axes, or the carrier comprises several parallel discs of which at least one may be coated face-and-back by said coating means.

In said embodiment the process for producing plane-parallel platelets, comprises
I) coating a partial surface of a rigid carrier rotatable about an axis and located in a vacuum chamber subsequently with a layer of the separating agent I, with a layer of the separating agent II, at least one product layer, and a layer of the separating agent II,
II) transporting said partial surface through rotation of said carrier subsequently to step I),
III) stripping said product layer from said partial surface of said carrier located in said vacuum chamber subsequently to step II) through dissolving the layer of separating agent I, in such a way that plane-parallel platelet precursors are produced.

The plane-parallel platelet precursors are converted to plane-parallel platelets by dissolving separating agent II in a suitable solvent.

Steps I) to III) are preferably performed during one rotation of said carrier.
Steps I), II) and III) are preferably performed continuously and simultaneously on different partial surfaces of said carrier at the same angular velocity of said carrier.

The separating agents I and II can, in principal, be applied by dipping, rolling, pouring or spraying, but are preferably applied by physical vapor deposition.

Advantageously, a surface coating can be applied in step I) on the partial surface of the carrier, which layer optionally solidifies on the carrier through cooling of the carrier. Subsequently layers of the separating agents I, II, and the product are vapor deposited in high vacuum, and afterwards in step III) said surface coating is melted, wherein the additional layers of separating agents I, II, and the product located thereon falls apart into flakes.

The surface coating is preferably solid at temperatures that can be easily obtained by inexpensive cooling means, such as by water cooling and simple refrigeration equipment. The surface coating should have a relatively high enough melting point so that the surface coating does not melt during the deposition of the layers of separation agents and products. The surface coating should be chemically inert for the conditions inherent in the process. Specifically, the surface coating should not react with any of the thin film layers deposited upon the surface coating. Also, the surface coating should be readily melted at modest temperatures so that it can be readily separated.

Preferably, the surface material is soluble in a convenient solvent that does not adversely affect the thin film particles. A preferred surface material is made from an olefinic material, such as highly refined waxes. Preferably, the wax has an initial melting point which is about 20°C greater than its final melting point. The term "wax" as used herein is meant to include paraffin waxes, microcrystalline waxes, polyethylene waxes and other similar materials having similar properties. Specific materials which have been found useful in the invention are refined paraffin waxes designated ROBWAX 2600, ROBWAX 2521, ROBWAX 2421, ROBWAX 2351 and ROBWAX 2271, all sold by C. J. Robertson Co., Inc., of Haverford, Pa.

Instead of dissolving the layer of the separating agent I, a knife blade disposed proximate to the surface of the drum can be used for scraping the thin film structure off.

Without modifying the apparatus the process can be used to prepare a huge number of alternating layers of separating agent II and product on separating agent I [separating agent I / (separating agent II, product)n / separating agent II, wherein n is the number of repetitions of separating agent II and product and is in a preferred range of from 1 to 150. More repetitions are, in principal, possible, wherein the maximum number of repetitions n is defined by the adhesion force of the separating agent I.

At first the separating agent I is vapor deposited by using a vaporizer. The vaporizer of the separating agent II and the product are closed by closable baffles.

Then the separating agent II and the product are vapor deposited by using two different vaporizers. The vaporizer of the separating agent I is closed by a closable baffle.

Then the vaporizers of the separating agents I and II and the product are closed by closable baffles and flakes are separated from the rotatable body by dissolving the separating agent I in water.

It is also possible to arrange several separating agent and product vaporisers one after the other in the running direction of the rotational body in the vaporisation zone. By that means there is obtained, with little additional outlay in terms of apparatus, a layer sequence of Sl + SII + P + SII + P + SII, wherein SI is the layer of separating agent I and SII is the layer of separating agent II and P is the product layer.

In another preferred embodiment the present invention relates to the production of diffractive pigment flakes. The diffractive pigment flakes include single layer or multiple layer flakes that have a diffractive structure formed on a surface thereof. The multiple layer flakes can have a symmetrical stacked coating structure on opposing sides of a reflective core layer, or can be formed with encapsulating coatings around the reflective core layer. The diffractive pigment flakes can be formed with a variety of diffractive structures thereon to produce selected optical effects. In particular, the diffractive pigment flakes are fabricated to have specific diffractive surface microstructures along with physical and micro-mechanical attributes that provide enhanced optical effects. The diffractive structure on the flakes can be an optical interference pattern such as a diffractive grating or holographic image pattern. Depending on the desired optical effects, suitable grated microstructures are selected for the production of flakes with the optimal diffractive effects. Such optical effects are created by the right combination of diffractive and reflective optics to produce, for example, strong, eye-catching optical effects that change and flash as the viewer changes position. For example, the pigment flakes can include a higher frequency diffractive grating microstructure such as a diffraction grating pattern having greater than about 1100 grating lines per mm (In/mm) to create a wide range of optical effects. That is, the diffractive effects are only perceptible outside the visible wavelength range, such as in the ultraviolet (UV) or infrared (IR) wavelength ranges. This covert feature is produced by using gratings which only preferentially create diffractive effects in the UV or IR wavelength range. For example, at normal incidence, flakes with a grating frequency above about 2500 In/mm produce diffractive effects that are only perceptible in the wavelength range of about 100 nm to about 400 nm. Thus, a conventional UV detection apparatus can be configured to quickly and accurately detect the presence of such diffractive flakes, while the unaided human eye is unable to detect the presence of the diffractive structures.

The diffractive flakes can be formed to have a physical thickness of about 500 nm to about 2 microns (2,000 nm), preferably about 500 nm to about 1400 nm (1.4 microns). The line frequency of the diffractive structure on the flakes is preferably greater than about 1,200 In/mm, such that light corresponding to the range of visible wavelengths in the first or higher order diffracted beams is substantially angularly separated from the same range of wavelengths in higher order diffracted beams when illuminated at normal incidence up to at least about 60 degrees from normal incidence. The diffractive structure can be a linear blazed (i.e., sawtooth shape) grating having a frequency of at least about 1,400 In/mm and a groove depth greater than about 160 nm, or a linear sinusoidal grating having a frequency of at least about 2,000 In/mm and a groove depth greater than about 160 nm.

In one preferred embodiment of the diffractive flakes, a transparent dielectric material, such as magnesium fluoride (MgF₂), or SiO_{z}, can be deposited as a first layer and third layer to form stiffening protective layers over a second (inner) opaque aluminum layer. The MgF₂, or SiO_{z} layers are preferably each about 250 nm to about 450 nm thick, and the aluminum layer is preferably about 80 nm to about 160 nm thick. The diffractive flakes have a total thickness of less than about 1,400 nm, and preferably from about 500 nm to about 900 nm.

The diffractive structure is formed on at least a portion of one or both of the major surfaces of the flakes. The diffractive structure on the flakes can be a diffraction grating pattern with at least about 1,400 grating In/mm and a grating depth of at least about 150 nm. Preferably, the diffraction grating pattern can have from about 1400 to about 3500 grating In/mm, with a grating depth from about 150 nm to about 230 nm, and more preferably, the diffraction grating pattern can have from about 1400 to about 1700 grating In/mm, and a grating depth from about 160 nm to about 220 nm.

When the diffractive flakes consist of a single layer, a reflective material can be used to form said layer. Presently preferred reflective materials include various metals or metal alloys because of their high reflectivity and ease of use, although non-metallic reflective materials can also be used. Nonlimiting examples of suitable metallic materials include aluminum, silver, copper, gold, platinum, tin, titanium, palladium, nickel, cobalt, rhodium, niobium, chromium, and compounds, combinations or alloys thereof. The flakes consisting of a single layer can have a physical thickness of from about 500 nm to about 1400 nm, preferably from about 700 nm to about 1200 nm.

In another preferred embodiment the diffractive metal flakes consists of a single layer having a thickness of 20 to 60 nm and a diffraction grating having from about 5,000 to about 11,000 grooves per cm.

The diffractive flakes can have a three layer design with a generally symmetrical thin film structure, including a central reflector layer and opposing dielectric layers and on opposing major surfaces of reflector layer but not on at least one side surface of the reflector layer. The reflector layer can be composed of the same reflective materials as discussed previously for the single layer flakes. The dielectric layers can be composed of various dielectric materials such as those having a refractive index of about 1.65 or less, and preferably a refractive index of about 1.5 or less. Nonlimiting examples of suitable dielectric materials include magnesium fluoride, SiO_{z}, silicon dioxide, aluminum oxide, aluminum fluoride, cerium fluoride, lanthanum fluoride, neodymium fluoride, samarium fluoride, barium fluoride, calcium fluoride, lithium fluoride, and combinations thereof. The reflector layer can have a physical thickness of from about 40 nm to about 200 nm, and preferably from about 80 nm to about 160 nm. The dielectric layers can each have a physical thickness of about 1 micron or less, preferably from about 200 nm to about 600 nm, and more preferably from about 250 nm to about 450 nm.

In a method for fabricating the diffractive flakes, the separating agent layers, the reflector layer and optionally dielectric layers are deposited on a (movable) carrier having a diffractive grating on its surface in a sequential manner according to the desired flake design. The diffractive flakes are separated by dissolving the separating agents in suitable solvents. The carrier can be an embossed metal carrier, such as a metal belt, a rotating disk or cylinder. The diffractive grating can be produced by etching. Instead of metal a heat-resistant plastic, such as Caption® can be used.

The invention also relates to the use of the pigments based on the aluminum flakes according to the invention in paints, textiles (see, for example, WO04/035911), ink-jet printing (see, for example, WO04/035684), cosmetics (see, for example, WO04/020530), printing inks, plastics materials, coatings, especially in automotive finishes, in glazes for ceramics and glass, and in security printing.

If the layers present on the aluminum core are applied by PVD, those layers will be present only on the parallel faces of the core and not, however, on the side faces. If (further) layers are applied by wet-chemical precipitation, they will cover the entire surface of the flakes.

The Examples that follow illustrate the invention without limiting the scope thereof. Unless otherwise indicated, percentages and parts are percentages and parts by weight, respectively.

### Examples

### Example 1

The following steps are conducted in a vacuum chamber under a vacuum of 10⁻⁵ mbar.
a) A layer of 300 nm of pentaerythritole is sublimed on a 1.2 m² polished stainless steel substrate.
b) A layer of 300 nm of pyromellitic dianhydride (CAS [89-32-7]) is sublimed on the pentaerythritole layer.
c) A layer of 40 nm of Al is evaporated on the pyromellitic dianhydride layer.
d) Steps 2) and 3) are repeated 8 times.
e) Finally, a layer of 300 nm of pyromellitic dianhydride is sublimed on the last Al layer.

The stainless steel substrate is removed from the vacuum chamber. The pentaerythritole layer is dissolved in water and the Al/pyromellitic dianhydride multilayer flakes are collected (slurry). The water of the slurry is replaced with ethanol in order to dissolve the pyromellitic dianhydride, wherein bright Al flakes are obtained which are stable against oxidation after substituting the ethanol with ethyl acetate.

## Claims

1. A process for the production of plane-parallel platelets, comprising the steps:
a) deposition of a separating agent I, which is dissolvable in water, onto a carrier to produce a separating agent layer
b) vapour-deposition of a separating agent II, which is not dissolvable in water, onto the separating agent layer of step a),
c) vapour-deposition of at least one product layer onto the separating agent layer of step b), and
d) vapour-deposition of a separating agent II, which is not dissolvable in water, onto the product layer of step c),
e) dissolution of the separating agent layer of step a) in water and production of a suspension in which the at least one product layer is present in the form of plane-parallel platelets, the top surface and the bottom surface, but not the side surfaces of which are covered by the separating agent II, and
f) dissolution of the separating agent layer of steps b) and d) in a solvents and production of a suspension in which the product, comprising at least one layer, is present in the form of plane-parallel platelets.

2. The process according to claim 1, wherein the separating agent I is vapour-deposited.

3. The process according to claim 1, or 2, wherein the separating agent I is selected from anthracene, anthraquinone, acetamidophenol, acetylsalicylic acid, camphoric anhydride, benzimidazole, benzene-1,2,4-tricarboxylic acid, biphenyl-2,2-dicarboxylic acid, bis(4-hydroxyphenyl)sulfone, dihydroxyanthraquinone, hydantoin, 3-hydroxybenzoic acid, 8-hydroxyquinoline-5-sulfonic acid monohydrate, 4-hydroxycoumarin, 7-hydroxycoumarin, 3-hydroxynaphthalene-2-carboxylic acid, isophthalic acid, 4,4-methylene-bis-3-hydroxynaphthalene-2-carboxylic acid, naphthalene-1,8-dicarboxylic anhydride, phthalimide and its potassium salt, phenolphthalein, phenothiazine, saccharin and its sails, tetraphenylmethane, triphenylene, triphenyl methanol, and also mixtures of at least two of those substances, especially pentaerythritol (C(CH₂OH)₄), trimesic acid (= 1,3,5 bezene tricarboxylic acid), DL-alanine, DL-valine, 2,6-diaminopurine, ascorbic acid, 1,3,5-benzenetricarboxylic acid, o-acetyisalicyclic, acid, diphenic acid, terephthalic acid, pyrogallol, cyanuric acid, hexamethyltetramine (uratropin), fumaric acid, and 4-acetylbenzoic acid and also mixtures of at least two of those substances.

4. The process according to any of claims 1 to 3, wherein the separating agent II is selected from polymer, especially a soluble, partly cured polymer, benzimidazole, dihydroxyanthraquinone, 4-hydroxycoumarin,7-hydroxycournarin, acetamidophenol, anthracene, anthraquinone, bis(4-hydroxyphohyl)sulfone, phenolphthalein, tetraphenylmethane, triphenylene, triphenylmethanol, adamantane and derivatives of adamantane, such as 1-cyanoadamantane, 1-adamantane carboxylic acid, 1-hydroxyadamantane, 2-hydroxyadamantane, 2-oxoadamantane, diphenic acid, 7-hydroxycoumarin, benzoguanamine (2, 4,6-diamino-4-phenyl-1 , 3, 5-triazine), ferrocen, campher and derivatives, anthracene, 9,10-anthraquinone and pyromellitic dianhydride.

5. The process according to any of claims 1 to 4, wherein the plane-parallel platelets are metal platelets, especially platelets of Al, Cu, Mo, V, Ag, Cr, Zr, Nb, Ni, Fe, Co, Ti, Au, Pd, W, Hf, Rh, Ir, Pt, Cd or alloys thereof, such as chromium-nickel, iron-nickel, Iron-chromium and nickel-cobalt, very especially platelets of Cu, Ag, Ti, or Al, or alloys thereof.

6. The process according to any of claims 1 to 4, wherein the plane-parallel platelets are SiO_{y} flakes, wherein 0.70 ≤ y ≤ 1.95. preferably 1.0 ≤ z ≤ 1.8, most preferably 1.0 ≤ z ≤ 1.6.

7. The process according to any of claims 1 to 6, wherein multiple layers of separating agent II and product are deposited alternately, wherein the top surface and the bottom surface of each product layer is covered by a layer of separating agent II.

## Patentansprüche

1. Verfahren zur Herstellung von planparallelen Plättchen mit den Schritten:
a) Abscheiden eines Trennmittels I, das in Wasser löslich ist, auf einen Träger zum Erzeugen einer Trennmittelschicht,
b) Aufdampfen eines Trennmittels II, das nicht in Wasser löslich ist, auf die Trennmittelschicht aus Schritt a),
c) Aufdampfen mindestens einer Produktschicht auf die Trennmittelschicht aus Schritt b) und
d) Aufdampfen eines Trennmittels II, das nicht in Wasser löslich ist, auf die Produktschicht aus Schritt c),
e) Lösen der Trennmittelschicht aus Schritt a) in Wasser und Erzeugen einer Suspension, in der die mindestens eine Produktschicht in Form von planparallelen Plättchen vorliegt, deren Oberseite und Unterseite, aber nicht deren Seitenflächen, durch das Trennmittel II bedeckt sind, und
f) Lösen der Trennmittelschicht aus den Schritten b) und d) in einem Lösungsmittel und Erzeugen einer Suspension, in der das mindestens eine Schicht umfassende Produkt in Form von planparallelen Plättchen vorliegt.

2. Verfahren nach Anspruch 1, bei dem das Trennmittel I aufgedampft wird.

3. Verfahren nach Anspruch 1 oder 2, bei dem man das Trennmittel I unter Anthracen, Anthrachinon, Acetamidophenol, Acetylsalicylsäure, Camphersäureanhydrid, Benzimidazol, Benzol-1,2,4-tricarbonsäure, Biphenyl-2,2-dicarbonsäure, Bis(4-hydroxyphenyl)sulfon, Dihydroxyanthrachinon, Hydantoin, 3-Hydroxybenzoesäure, 8-Hydroxychinolin-5-sulfonsäure-monohydrat, 4-Hydroxycumarin, 7-Hydroxycumarin, 3-Hydroxynaphthalin-2-carbonsäure, Isophthalsäure, 4,4-Methylenbis-3-hydroxynaphthalin₋2-carbonsäure, Naphthalin-1,8-dicarbonsäureanhydrid, Phthalimid und dessen Kaliumsalz, Phenolphthalein, Phenothiazin, Saccharin und seinen Salzen, Tetraphenylmethan, Triphenylen, Triphenylmethanol sowie Mischungen aus mindestens zwei dieser Stoffe, insbesondere Penaerythrit (C(CH₂OH)₄), Trimesinsäure (= 1,3,5-Benzoltricarbonsäure), DL-Alanin, DL-Valin, 2,6-Diaminopurin, Ascorbinsäure, 1,3,5-Benzoltricarbonsäure, o-Acetylsalicylsäure, Diphensäure, Tetraphthalsäure, Pyrogallol, Cyanursäure, Hexamethyltetramin (Urotropin), Fumarsäure und 4-Acetylbenzoesäure sowie Mischungen aus mindestens zwei dieser Stoffe, auswählt.

4. Verfahren nach einem der Ansprüche 1 bis 3, bei dem man das Trennmittel II unter Polymer, insbesondere einem löslichen, teilweise gehärteten Polymer, Benzimidazol, Dihydroxyanthrachinon, 4-Hydroxycumarin, 7-Hydroxycumarin, Acetamidophenol, Anthracen, Anthrachinon, Bis(4-hydroxyphenyl)-sulfon, Phenolphthalein, Tetraphenylmethan, Triphenylen, Tripehnylmethanol, Adamantan und Derivaten von Adamantan, wie 1-Cyanoadamantan, 1-Adamantancarbonsäure, 1-Hydroxyadamantan, 2-Hydroxyadamantan, 2-Oxoadamantan, Diphensäure, 7-Hydroxycumarin, Benzoguanamin (2,4,6-Diamino-4-phenyl-1,3,5-triazin), Ferrocen, Campher und Derivaten, Anthracen, 9,10-Anthrachinon und Pyromellitsäuredianhydrid auswählt.

5. Verfahren nach einem der Ansprüche 1 bis 4, bei dem es sich bei den planparallelen Plättchen um Metallplättchen, speziell Plättchen aus Al, Cu, Mo, V, Ag, Cr, Zr, Nb, Ni, Fe, CO, Ti, Au, Pd, W, Hf, Rh, Ir, Pt, Cd oder Legierungen davon, wie Chrom-Nickel, Eisen-Nickel, Eisen-Chrom und Nickel-Cobalt, ganz speziell Plättchen aus Cu, Ag, Ti oder Al oder Legierungen davon, handelt.

6. Verfahren nach einem der Ansprüche 1 bis 4, bei dem es sich bei den planparallelen Plättchen um SiO_{y}-Flakes, worin 0,70 ≤ y ≤ 1,95, vorzugsweise 1,0 ≤ z ≤ 1,8, ganz besonders bevorzugt 1,0 ≤ z ≤ 1,6, handelt.

7. Verfahren nach einem der Ansprüche 1 bis 6, bei dem man alternierend mehrere Schichten von Trennmittel II und Produkt abscheidet, wobei die Oberseite und die Unterseite jeder Produktschicht durch eine Schicht von Trennmittel II bedeckt werden.

## Revendications

1. Procédé de fabrication de plaquettes à plans parallèles, comprenant les étapes suivantes :
a) le dépôt d'un agent de séparation I, qui est dissolvable dans l'eau, sur un support pour fabriquer une couche d'agent de séparation ;
b) le dépôt en phase vapeur d'un agent de séparation II, qui n'est pas dissolvable dans l'eau, sur la couche d'agent de séparation de l'étape a),
c) le dépôt en phase vapeur d'au moins une couche de produit sur la couche d'agent de séparation de l'étape b) et
d) le dépôt en phase vapeur d'un agent de séparation II, qui n'est pas dissolvable dans l'eau, sur la couche de produit de l'étape c),
e) la dissolution de la couche d'agent de séparation de l'étape a) dans de l'eau et la fabrication d'une suspension dans laquelle la ou les couches de produit sont présentes sous la forme de plaquettes à plans parallèles, dont la surface supérieure et la surface inférieure, mais pas les surfaces latérales, sont recouvertes par l'agent de séparation II, et
f) la dissolution de la couche d'agent de séparation des étapes b) et d) dans un solvant et la fabrication d'une suspension dans laquelle le produit, comprenant au moins une couche, est présent sous la forme de plaquettes à plans parallèles.

2. Procédé selon la revendication 1, dans lequel l'agent de séparation I est déposé en phase vapeur.

3. Procédé selon la revendication 1 ou 2, dans lequel l'agent de séparation I est choisi parmi l'anthracène, l'anthraquinone, l'acétamidophénol, l'acide acétylsalicylique, l'anhydride camphorique, le benzimidazole, l'acide benzène-1,2,4-tricarboxylique, l'acide biphényl-2,2-dicarboxylique, la bis(4-hydroxyphényl)sulfone, la dihydroxyanthraquinone, l'hydantoïne, l'acide 3-hydroxybenzoïque, le monohydrate de l'acide 8-hydroxyquinoline-5-sulfonique, la 4-hydroxycoumarine, la 7-hydroxycoumarine, l'acide 3-hydroxynaphtalène-2-carboxylique, l'acide isophtalique, l'acide 4,4-méthylène-bis-3-hydroxynaphtalène-2-carboxylique, l'anhydride naphtalène-1,8-dicarboxylique, le phtalimide et son sel de potassium, la phénolphtaléine, la phénothiazine, la saccharine et ses sels, le tétraphénylméthane, le triphénylène, le triphénylméthanol, ainsi que les mélanges d'au moins deux de ces substances, notamment le pentaérythritol (C(CH₂OH)₄), l'acide trimésique (= acide 1,3,5-benzène-tricarboxylique), la DL-alanine, la DL-valine, la 2,6-diaminopurine, l'acide ascorbique, l'acide 1,3,5-benzène-tricarboxylique, l'acide o-acétylsalicylique, l'acide diphénique, l'acide téréphtalique, le pyrogallol, l'acide cyanurique, l'hexaméthyltétramine (urotropine), l'acide fumarique et l'acide 4-acétylbenzoïque, ainsi que les mélanges d'au moins deux de ces substances.

4. Procédé selon l'une quelconque des revendications 1 à 3, dans lequel l'agent de séparation II est choisi parmi un polymère, notamment un polymère soluble partiellement durci, le benzimidazole, la dihydroxyanthraquinone, la 4-hydroxycoumarine, la 7-hydroxycoumarine, l'acétamidophénol, l'anthracène, l'anthraquinone, la bis(4-hydroxyphényl)sulfone, la phénolphtaléine, le tétraphénylméthane, le triphénylène, le triphénylméthanol, l'adamantane et les dérivés d'adamantane, tels que le 1-cyanoadamantane, l'acide 1-adamantane-carboxylique, le 1-hydroxyadamantane, le 2-hydroxyadamantane, le 2-oxoadamantane, l'acide diphénique, la 7-hydroxycoumarine, la benzoguanamine (2,4,6-diamino-4-phényl-1,3,5-triazine), le ferrocène, le camphre et ses dérivés, l'anthracène, la 9,10-anthraquinone et le dianhydride pyroméllitique.

5. Procédé selon l'une quelconque des revendications 1 à 4, dans lequel les plaquettes à plans parallèles sont des plaquettes métalliques, notamment des plaquettes d'Al, Cu, Mo, V, Ag, Cr, Zr, Nb, Ni, Fe, Co, Ti, Au, Pd, W, Hf, Rh, Ir, Pt, Cd ou leurs alliages, tels que chrome-nickel, fer-nickel, fer-chrome et nickel-cobalt, tout particulièrement des plaquettes de Cu, Ag, Ti ou Al ou leurs alliages.

6. Procédé selon l'une quelconque des revendications 1 à 4, dans lequel les plaquettes à plans parallèles sont des flocons de SiO_{y}, avec 0,70 ≤ y ≤ 1,95, de préférence 1,0 ≤ y ≤ 1,8, de manière préférée entre toutes 1,0 ≤ y ≤1,6.

7. Procédé selon l'une quelconque des revendications 1 à 6, dans lequel des couches multiples de l'agent de séparation II et du produit sont déposées en alternance, la surface supérieure et la surface inférieure de chaque couche de produit étant recouverte par une couche d'agent de séparation II.
